# EUROPÄISCHE PATENTSCHRIFT

(11) **EP 2 739 867 B1**
(45) Veröffentlichungstag und Bekanntmachung des Hinweises auf die Patenterteilung: **17.05.2017**
(21) Anmeldenummer: 12743654.1
(22) Anmeldetag: 12.07.2012
(51) Int. Cl.: F16D 13/58, F16D 21/06

(54) **KUPPLUNGSAGGREGAT**
CLUTCH ASSEMBLY
GROUPE EMBRAYAGE

(30) Priorität: 05.08.2011 DE 102011080484
(43) Veröffentlichungstag der Anmeldung: 11.06.2014
(73) Patentinhaber: Schaeffler Technologies AG & Co. KG, 91074 Herzogenaurach (DE)
(72) Erfinder: REIMNITZ, Dirk, 77815 Bühl (DE)
(86) Internationale Anmeldenummer: PCT/DE2012/000694
(87) Internationale Veröffentlichungsnummer: WO 2013/020531

(56) Entgegenhaltungen:
- EP-A1- 1 306 572
- EP-A1- 1 862 685
- DE-A1-102009 042 224
- DE-A1-102010 047 803
- FR-A1- 2 886 998

## Beschreibung

Die Erfindung betrifft ein Kupplungsaggregat, mit dessen Hilfe eine Antriebswelle eines Kraftfahrzeugmotors mit mindestens einer Getriebeeingangswelle eines Kraftfahrzeuggetriebes gekuppelt werden kann.

Beispielsweise aus DE 10 2008 004 150 A1 ist ein Kupplungsaggregat bekannt, bei dem ein Zweimassenschwungrad zur Drehschwingungsdämpfung einer Kurbelwelle eines Kraftfahrzeugverbrennungsmotors über eine Steckverzahnung mit einer als Doppelkupplung ausgestalteten Kupplung verbunden ist. Bei der Montage wird zunächst das Zweimassenschwungrad mit der Kurbelwelle verbunden, während die Doppelkupplung mit den Getriebeeingangswellen des Kraftfahrzeuggetriebes verbunden wird. Nachfolgend wird die Kurbelwelle mit den Getriebeeingangswelle dadurch gekoppelt, dass die Steckverzahnung des mit der Kurbelwelle verbundenen Zweimassenschwungrads in die Steckverzahnung der mit den Getriebeeingangswellen verbundenen Kupplung eingesteckt wird. Um einen Versatz in Umfangsrichtung auszugleichen und ein Klappern zu vermeiden, können die ineinander gesteckten Teile der Steckverzahnung mit einer Verspanneinheit tangential verspannt werden. Weitere Kupplungsaggregaten sind aus DE 10 2010 047 803 A1 und EP 1 862 685 bekannt. Es besteht ein ständiges Bedürfnis den Bauraumbedarf von Kupplungsaggregaten an unterschiedliche Bauformen von Kraftfahrzeuggetrieben und Kraftfahrzeugmotoren anpassen zu können ohne die Montage zu erschweren.

Es ist die Aufgabe der Erfindung ein Kupplungsaggregat zu schaffen, das einen geringen Bauraumbedarf und eine einfache Montage eines Kraftfahrzeugmotors mit einem Kraftfahrzeuggetriebe ermöglicht.

Die Lösung der Aufgabe erfolgt erfindungsgemäß durch die Merkmale des Anspruchs 1, die Merkmale des Anspruchs 3, die Merkmale des Anspruchs 6 sowie die Merkmale des Anspruchs 9. Bevorzugte Ausgestaltungen der Erfindung sind in den Unteransprüchen angegeben. Es ist ein Kupplungsaggregat zum Kuppeln einer Antriebswelle eines Kraftfahrzeugmotors mit mindestens einer Getriebeeingangswelle eines Kraftfahrzeuggetriebes vorgesehen, mit einem mit der Antriebswelle verbindbaren Zweimassenschwungrad zur Drehschwingungsdämpfung, wobei das Zweimassenschwungrad eine Primärmasse zum Einleiten eines Drehmoments und eine Sekundärmasse zum Ausleiten eines Drehmoments aufweist, wobei die Primärmasse über eine in einem Bogenfederkanal angeordnete Bogenfeder begrenzt verdrehbar mit der Sekundärmasse gekoppelt ist, einer mit mindestens einer Getriebeeingangswelle verbindbaren Kupplung, insbesondere Doppelkupplung, und einem Endmontagemittel zum Verbinden der Antriebswelle mit der mindestens einen Getriebeeingangswelle über das Kupplungsaggregat, wobei das Endmontagemittel direkt oder über einen Starterkranz mit der Primärmasse verbunden ist und der Bogenfederkanal an der Primärmasse radial zentriert ist. Durch die eingesparte Steckverzahnung zwischen dem Zweimassenschwungrad und der Kupplung kann der Bauraumbedarf radial innerhalb des Zweimassenschwungrads reduziert werden, so dass bei einem geringen Bauraumbedarf eine einfache Montage des Kraftfahrzeugmotors mit dem Kraftfahrzeuggetriebe ermöglicht ist. Das Grundkonzept beruht darauf die Vormontage des Zweimassenschwungrads mit der Antriebswelle (motorseitige Baugruppe) sowie die Vormontage der Kupplung mit der Getriebeeingangswelle (getriebeseitige Baugruppe) aufzuheben und das Zweimassenschwungrad mit der Kupplung ohne Steckverzahnung fest zu verbinden. Hierzu wird die Trennstelle zwischen der motorseitigen Baugruppe und der getriebeseitigen Baugruppe derart verschoben, insbesondere in das Zweimassenschwungrad oder in die Kupplung hinein, dass das Endmontagemittel, insbesondere eine Schraube, an einer von außen leicht zugänglichen Stelle die Baugruppen für die Endmontage der Motoreinheit mit der Getriebeeinheit miteinander verbinden kann. Das Endmontagemittel ist insbesondere verliersicher montiert und/oder mit Hilfe einer Schraubensicherung (z. B. selbst- oder fremdhemmende Schraubensicherung oder Verliersicherung, beispielsweise eine Unterlegscheibe mit Sperrverzahnung), gegen ein Lösen oder ein Herausfallen gesichert. Insbesondere ist das Zweimassenschwungrad mit der Kupplung über eine feste Verbindung, beispielsweise Nietverbindung oder Schraubenverbindung, verbunden, so dass eine Steckverzahnung zwischen dem Zweimassenschwungrad und der Kupplung eingespart werden kann, wodurch insbesondere das Risiko von Klappergeräuschen reduziert werden kann. Insbesondere ist es möglich bei der Endmontage, wenn mit Hilfe des Endmontagemittels die Antriebswelle über das Kupplungsaggregat mit der Getriebeeingangswelle verbunden wird, wodurch ein radialer und/oder axialer Toleranzausgleich erreicht werden kann.

Dadurch, dass das erfindungsgemäß Endmontagemittel die den Bogenfederkanal umfassende Primärmasse mit einer an der Kurbelwelle angebrachten Verbindungsplatte (Flexplate oder Driveplate) oder einer Schwungscheibe verbindet, können Primärmasse und Sekundärmasse des Zweimassenschwungrades zusammen mit der Kupplung der getriebeseitigen Baugruppe zugeordnet sein. Hierzu ist das Endmontagemittel insbesondere als Schraube ausgestaltet, die in ein Sackloch mit Innengewinde, das in der Primärmasse ausgebildet ist, eingeschraubt ist. Dies ermöglicht eine einfache Endmontage durch ein Verschrauben in axialer oder radialer Richtung. Gleichzeitig ermöglicht diese Anordnung des Endmontagemittels eine einfache Geometrie für die Primärmasse, die beispielsweise im Querschnitt im Wesentlichen L-förmig ausgestaltet sein kann. Dadurch ist es möglich den Bogenfederkanal an der Schwungsscheibe/Verbindungsplatte/Flexplate/Driveplate radial zu zentrieren, ohne dass für die radiale Zentrierung ein mit der Schwungsscheibe/ Verbindungsplatte/ Flexplate/ Driveplate vorzugsweise durch Schweißen verbundener Deckel erforderlich ist. Vorzugsweise weist die Schwungsscheibe/Verbindungsplatte/Flexplate/Driveplate eine nach radial innen weisende, insbesondere im Querschnitt teilkreisförmige, Innenkontur auf. Dadurch kann der Bogenfederkanal in eine korrespondierende Konturierung der Primärmasse eingelegt werden, so dass sich gleichzeitig eine einfache Montage des Zweimassenschwungrads ergibt.

Mit der Primärmasse kann auch ein Starterkranz zum Anbinden eines elektrischen Starters insbesondere durch Schweißen verbunden sein, wobei in diesem Fall die Primärmasse mittelbar über den Starterkranz mit dem Endmontagemittel verbunden sein kann. Beispielsweise kann der Startkranz ein Innengewinde für das als Schraube ausgestalte Endmontagemittel ausbilden, wobei der Starterkranz hierzu insbesondere ein mit dem Innengewinde versehenes Durchgangsloch aufweist, das schnell und einfach gefertigt werden kann. Ferner ist es möglich, dass der Starterkranz beispielsweise durch Schweißen mit dem Schwungrad verbunden ist und das Endmontagemittel durch ein in dem Starterkranz oder dem Schwungrad ausgebildetes Durchgangsloch hindurch geführt ist.

Durch das Endmontagemittel erfolgt die endgültige Verbindung der Antriebswelle des Kraftfahrzeugmotors mit der mindestens einen Getriebeeingangswelle des Kraftfahrzeuggetriebes. Bei den vorherigen Montageschritten wurden entweder Bauteile bei der motorseitigen Baugruppe direkt oder indirekt mit der Antriebswelle oder bei der getriebeseitigen Baugruppe direkt oder indirekt mit der mindestens einen Getriebeeingangswelle verbunden. Durch das Endmontagemittel wird die motorseitige Baugruppe mit der getriebeseitigen Baugruppe verbunden, wobei hierbei insbesondere auch eine Ausrichtung der Antriebswelle zur Getriebeeingangswelle erfolgt. Durch die Bogenfeder kann bei Drehzahlschwankungen der Antriebswelle, die durch eine motorische Verbrennung des Kraftfahrzeugmotors verursacht sein können, Energie gespeichert und wieder abgegeben werden, so dass mit einem hohen Wirkungsgrad Drehzahlschwankungen durch eine begrenzte Verdrehbarkeit der Sekundärmasse zur Primärmasse gedämpft oder getilgt werden können. Die im Wesentlichen in Umfangsrichtung verlaufende Bogenfeder, insbesondere zwei oder mehr radial ineinander angeordnete Bogenfedern, kann insbesondere nach radial außen durch den Bogenfederkanal geführt sein, wobei der Bogenfederkanal insbesondere mit einem Schmiermittel, insbesondere Schmierfett, geschmiert sein kann.

Insbesondere ist ein Federblech, insbesondere eine Flexplate, mit Hilfe des Endmontagemittels mit der Primärmasse verbunden, wobei insbesondere die Primärmasse über einen Axialanschlag an einem mit dem Federblech verbundenen Bauteil, insbesondere eine mit der Antriebswelle verbindbaren Schwungscheibe, anliegt und das Federblech in axialer Richtung zur Versteifung des Federblechs vorgespannt ist. Das Federblech weist üblicherweise eine geringere axiale Dicke als ein Schwungrad auf, so dass Bauraum in axialer Richtung eingespart werden kann.

Alternativ kann das Federblech als Flexplate einen Axialausgleich ermöglichen. Falls dies nicht erforderlich ist, ist es möglich das Federblech zu verspannen, so dass sich das Federblech im Wesentlichen wie ein starres Bauteil verhält. Hierzu kann das Federblech mit Hilfe des Endmontagemittels derart verspannt werden, dass das Federblech beispielsweise einen Axialanschlag der Primärmasse gegen eine Schwungscheibe presst.

Die Erfindung betrifft ferner ein Kupplungsaggregat zum Kuppeln einer Antriebswelle eines Kraftfahrzeugmotors mit mindestens einer Getriebeeingangswelle eines Kraftfahrzeuggetriebes, mit einem mit der Antriebswelle verbindbaren Zweimassenschwungrad zur Drehschwingungsdämpfung, wobei das Zweimassenschwungrad eine Primärmasse zum Einleiten eines Drehmoments und eine Sekundärmasse zum Ausleiten eines Drehmoments aufweist, einer mit mindestens einer Getriebeeingangswelle verbindbaren Kupplung, insbesondere Doppelkupplung, einem Endmontagemittel zum Verbinden der Antriebswelle mit der mindestens einen Getriebeeingangswelle über das Kupplungsaggregat und einem Mitnehmerring zur Verbindung des Zweimassenschwungrads mit der Kupplung, wobei die Kupplung eine Gegenplatte zum reibschlüssigen Verpressen einer Kupplungsscheibe zwischen der Gegenplatte und einer Anpressplatte aufweist, wobei der Mitnehmerring einen mit der Sekundärmasse verbundenen ersten Teilring und einen mit der Kupplung verbundenen zweiten Teilring aufweist, wobei der erste Teilring und der zweite Teilring durch das Endmontagemittel miteinander verbunden sind, wobei der erste Teilring über eine feste Befestigung mit der Sekundärmasse verbunden ist.

Hierzu sei angemerkt, dass unter dem Betriff "Teilring" im Sinne der vorliegenden Erfindung sowohl geschlossene Ringe als auch mehrere einzelne (Ring-)Segmente o. ä. Verbindungsbauteile als Kopplungselemente zu verstehen sind. Diese Segmente bzw. Kopplungselemente sind dann entsprechend in Umfangsrichtung verteilt angeordnet. Auch kann der Mitnehmerring als Ring mit mehreren Armen ausgebildet sein, die in radialer Richtung erstreckt sind, welche mit den einzelnen Kopplungselementen/Segmenten/Verbindungsbauteilen verbunden werden.

Der Mitnehmerring ist insbesondere ein von der Gegenplatte verschiedenes separates Bauteil. Der zweite Teilring ist insbesondere mit der Gegenplatte der Kupplung verbunden. Die Gegenplatte ist insbesondere eine Zentralplatte einer Doppelkupplung nach dem "Drei-Platten-Design", die sowohl für eine erste Reibungskupplung als auch für eine zweite Reibungskupplung die Gegenplatte ausbildet. Bei einer Doppelkupplung nach dem "Vier-Platten-Design", bei dem für jeder Reibungskupplung eine separate Gegenplatte vorgesehen ist, kann der zweite Teilring mit der Gegenplatte der von dem Zweimassenschwungrad wegweisenden Reibungskupplung verbunden sein, während der erste Teilring und/oder der zweite Teilring gleichzeitig die Gegenplatte für die zum Zweimassenschwungrad weisende Reibungskupplung ausbilden kann. Durch die Teilung des Mitnehmerrings kann an einer definierten Stelle eine Teilung der motorseitigen und der getriebeseitigen Baugruppe vorgesehen werden, so dass die dadurch definierte Trennstelle geeignet gewählt werden kann, um eine leichte Zugänglichkeit für das Endmontagemittel zu erreichen. Durch die eingesparte Steckverzahnung zwischen dem Zweimassenschwungrad und der Kupplung kann der Bauraumbedarf radial innerhalb des Zweimassenschwungrads reduziert werden, so dass bei einem geringen Bauraumbedarf eine einfache Montage des Kraftfahrzeugmotors mit dem Kraftfahrzeuggetriebe ermöglicht ist. Insbesondere ist es möglich radial außerhalb zur Bogenfeder des Zweimassenschwungrads oder auf radialer Höhe der Bogenfeder mit Hilfe des Endmontagemittels die motorseitige Baugruppe mit der getriebeseitigen Baugruppe zu verbinden. Dies ermöglicht eine gute Zugänglichkeit in axialer oder radialer Richtung. Der erste Teilring ist insbesondere mit der Sekundärmasse, beispielsweise durch eine Nietverbindung oder eine Schraubenverbindung, verbunden. Durch den Mitnehmerring wird insbesondere eine axiale Strecke zwischen dem Zweimassenschwungrad und der Kupplung überbrückt.

Insbesondere ist das Endmontagemittel im Wesentlichen radial ausgerichtet. Dadurch kann das Endmontagemittel an den Bauteilen des Zweimassenschwungrads und der Kupplung vorbei in radialer Richtung eingesetzt werden. Besonders bevorzugt ist das Endmontagemittel durch eine Verliersicherung gegen ein unbeabsichtigtes Lösen gesichert. Das Endmontagemittel kann als Schraube ausgestaltet sein, die in ein Innengewinde des ersten Teilrings und/oder des zweiten Teilrings eingeschraubt werden kann. Zur Ausbildung des Innengewindes kann der erste Teilring und/oder der zweite Teilring eine Verdickung aufweisen. Ferner kann das Endmontagemittel in eine mit dem ersten Teilring oder dem zweiten Teilring vorzugsweise durch Schweißen befestigten Mutter eingeschraubt werden.

Vorzugsweise ist der zweite Teilring mit einem Kupplungsdeckel der Kupplung zum Abdecken eines Teils der Kupplung oder mit einer Gegenplatte der Kupplung zum reibschlüssigen Verpressen einer Kupplungsscheibe zwischen der Gegenplatte und einer Anpressplatte verbunden. Der Kupplungsdeckel und die Gegenplatte können drehfest miteinander verbunden sein, so dass es ausreichend ist den zweiten Teilring entweder mit der Gegenplatte oder mit dem Kupplungsdeckel zu verbinden.

Die Erfindung betrifft ferner ein Kupplungsaggregat zum Kuppeln einer Antriebswelle eines Kraftfahrzeugmotors mit mindestens einer Getriebeeingangswelle eines Kraftfahrzeuggetriebes, mit einem mit der Antriebswelle verbindbaren Zweimassenschwungrad zur Drehschwingungsdämpfung, wobei das Zweimassenschwungrad eine Primärmasse zum Einleiten eines Drehmoments und eine Sekundärmasse zum Ausleiten eines Drehmoments aufweist, einer mit mindestens einer Getriebeeingangswelle verbindbaren Kupplung, insbesondere Doppelkupplung, einem Endmontagemittel zum Verbinden der Antriebswelle mit der mindestens einen Getriebeeingangswelle über das Kupplungsaggregat und einem Mitnehmerring zur Verbindung des Zweimassenschwungrads mit der Kupplung, wobei die Kupplung eine Gegenplatte zum reibschlüssigen Verpressen einer Kupplungsscheibe zwischen der Gegenplatte und einer Anpressplatte aufweist und der Mitnehmerring ein von der Gegenplatte verschiedenes separates Bauteil ist, wobei der Mitnehmerring über das Endmontagemittel mit der Gegenplatte oder einem Kupplungsdeckel der Kupplung zum Abdecken eines Teils der Kupplung verbunden ist, wobei das Endmontagemittel im Wesentlichen in radialer Richtung oder im Wesentlichen in axialer Richtung ausgerichtet ist.

Durch die Verbindung des Mitnehmerrings mit der Gegenplatte oder dem Kupplungsdeckel kann für das Endmontagemittel besonders einfach eine gut zugängliche Position gefunden werden, ohne dass eine Steckverzahnung zwischen dem Zweimassenschwungrad und der Kupplung vorgesehen werden muss. Durch die eingesparte Steckverzahnung zwischen dem Zweimassenschwungrad und der Kupplung kann der Bauraumbedarf radial innerhalb des Zweimassenschwungrads reduziert werden, so dass bei einem geringen Bauraumbedarf eine einfache Montage des Kraftfahrzeugmotors mit dem Kraftfahrzeuggetriebe ermöglicht ist. Insbesondere ist es möglich radial außerhalb zur Bogenfeder des Zweimassenschwungrads oder auf radialer Höhe der Bogenfeder mit Hilfe des Endmontagemittels die motorseitige Baugruppe mit der getriebeseitigen Baugruppe zu verbinden. Dies ermöglicht eine gute Zugänglichkeit in axialer oder radialer Richtung. Die Primärmasse sieht eine in Wesentlichen axial verlaufende durchgehende Montageöffnung zum Hindurchführen des Endmontagemittels vor. Dies ermöglicht es das Endmontagemittel durch die freigelassene Aussparung der Montageöffnung bis ins Innere des Kupplungsaggregats zu stecken, um die motorseitige Baugruppe mit der getriebeseitigen Baugruppe zu verbinden. Hierzu kann die Primärmasse beispielsweise eine Durchgangsöffnung oder eine nach radial außen geöffnete Aussparung vorsehen.

Vorzugsweise weist das Endmontagemittel einen Zentrierkonus zum Ausrichten der zu verbindenden Bauteile auf. Dadurch können die motorseitige Baugruppe und die getriebeseitige Baugruppe während der Montage des Endmontagemittels automatisch ausgerichtet werden. Das Endmontagemittel kann beispielsweise als Schraube ausgestaltet sein, deren Schraubenschaft über den Zentrierkonus mit dem Schraubenkopf verbunden ist. Wenn der Schraubenschaft des Endmontagemittels durch eine Öffnung des zu befestigenden Bauteils hindurch gesteckt und in das andere zu befestigende Bauteil eingeschraubt wird, kann der Zentrierkonus an der Kante der Öffnung entlang gleiten und dadurch das Bauteil mit der Öffnung automatisch ausrichten. Durch die eingesparte Steckverzahnung zwischen dem Zweimassenschwungrad und der Kupplung kann der Bauraumbedarf radial innerhalb des Zweimassenschwungrads reduziert werden, so dass bei einem geringen Bauraumbedarf eine einfache Montage des Kraftfahrzeugmotors mit dem Kraftfahrzeuggetriebe ermöglicht ist. Ein nicht erfindungsgemäßes Ausführungsbeispiel betrifft ferner ein Kupplungsaggregat zum Kuppeln einer Antriebswelle eines Kraftfahrzeugmotors mit mindestens einer Getriebeeingangswelle eines Kraftfahrzeuggetriebes, mit einem mit der Antriebswelle verbindbaren Zweimassenschwungrad zur Drehschwingungsdämpfung, wobei das Zweimassenschwungrad eine Primärmasse zum Einleiten eines Drehmoments und eine Sekundärmasse zum Ausleiten eines Drehmoments aufweist, einer mit mindestens einer Getriebeeingangswelle verbindbaren Kupplung, insbesondere Doppelkupplung, einem Endmontagemittel zum Verbinden der Antriebswelle mit der mindestens einen Getriebeeingangswelle über das Kupplungsaggregat, wobei das Endmontagemittel einen Zentrierkonus zum Ausrichten der zu verbindenden Bauteile aufweist.

Das Endmontagemittel kann beispielsweise als Schraube ausgestaltet sein, deren Schraubenschaft über den Zentrierkonus mit dem Schraubenkopf verbunden ist. Wenn der Schraubenschaft des Endmontagemittels durch eine Öffnung des zu befestigenden Bauteils hindurch gesteckt und in das andere zu befestigende Bauteil eingeschraubt wird, kann der Zentrierkonus an der Kante der Öffnung entlang gleiten und dadurch das Bauteil mit der Öffnung automatisch ausrichten. Durch die eingesparte Steckverzahnung zwischen dem Zweimassenschwungrad und der Kupplung kann der Bauraumbedarf radial innerhalb des Zweimassenschwungrads reduziert werden, so dass bei einem geringen Bauraumbedarf eine einfache Montage des Kraftfahrzeugmotors mit dem Kraftfahrzeuggetriebe ermöglicht ist.

Insbesondere ist das Endmontagemittel im Wesentlichen in radialer Richtung ausgerichtet. Dadurch kann das Endmontagemittel an den Bauteilen des Zweimassenschwungrads und der Kupplung vorbei in radialer Richtung eingesetzt werden. Besonders bevorzugt ist das Endmontagemittel durch eine Verliersicherung gegen ein unbeabsichtigtes Lösen gesichert.

Besonders bevorzugt weist die Primärmasse einen im Wesentlichen radial verlaufenden ersten Schenkel und einen im Wesentlichen axial verlaufenden zweiten Schenkel auf. Die Primärmasse kann dadurch im Wesentlichen L-förmig ausgestaltet sein. Dadurch ergibt sich eine einfache und leicht herstellbare Geometrie für die Primärmasse. Über die Dicke der Schenkel kann das Massenträgheitsmoment der Primärmasse einfach eingestellt werden.

Insbesondere ist ein, insbesondere durch Schweißen, mit der Primärmasse verbundener Deckel zum Abdecken der Bogenfeder vorgesehen, wobei insbesondere zwischen der Primärmasse und dem Deckel eine Abdichteinrichtung zum Abdichten der Sekundärmasse gegen die Primärmasse und den Deckel vorgesehen ist. Dies ermöglicht es zwischen der Primärmasse und dem Deckel einen ausreichend dichten Raum zur Anordnung einer gefetteten Bogenfeder vorzusehen. Bei einer im Wesentlichen L-förmigen Primärmasse kann der Deckel im Wesentlichen gegenüberliegend zu dem in radialer Richtung verlaufenden Schenkel der Primärmasse angeordnet sein und insbesondere mit dem in Wesentlichen axial verlaufenden Schenkel verbunden sein. Die Primärmasse und der Deckel können dadurch einen im Wesentlichen U-förmigen Kanal ausbilden, dessen Öffnung durch die Abdichteinheit geschlossen werden kann. Die Sekundärmasse kann im Wesentlichen vergleichbar zu einem Flansch aus dem durch die Primärmasse und den Deckel ausgebildeten Kanal herausragen. Über die Dicke der Sekundärmasse kann einfach das Massenträgheitsmoment der Sekundärmasse angepasst werden.

Vorzugsweise ist das Zweimassenschwungrad mit einer mit der Antriebswelle verbindbaren Schwungscheibe verbunden. Durch die Schwungscheibe kann das Massenträgheitsmoment erhöht werden, so dass es möglich ist das Massenträgheitsmoment der Primärmasse des Zweimassenschwungrads zu reduzieren.

Besonders bevorzugt ist die Kupplung als Doppelkupplung mit einer ersten Reibungskupplung und einer zweiten Reibungskupplung ausgestaltet, wobei die Kupplung eine Zentralplatte aufweist und die Zentralplatte sowohl für die erste Reibungskupplung als auch für die zweite Reibungskupplung eine Gegenplatte zum reibschlüssigen Verpressen einer Kupplungsscheibe zwischen der Zentralplatte und einer der jeweiligen Reibungskupplung zugeordneten Anpressplatte ausbildet. Dadurch ergibt sich eine Bauraum sparende Doppelkupplung nach dem "Drei-Platten-Design". Die erste Reibungskupplung kann eine erste Anpressplatte aufweisen, die mit Hilfe eines ersten Betätigungselements bewegt werden kann, um eine erste Kupplungsscheibe zwischen der insbesondere durch die Zentralplatte ausgebildeten ersten Gegenplatte und der ersten Anpressplatte zu verpressen. Entsprechend kann die zweite Reibungskupplung eine zweite Anpressplatte aufweisen, die mit Hilfe eines zweiten Betätigungselements bewegt werden kann, um eine zweite Kupplungsscheibe zwischen der insbesondere durch die Zentralplatte ausgebildeten zweiten Gegenplatte und der zweiten Anpressplatte zu verpressen. Das erste Betätigungselement und/oder das zweite Betätigungselement ist insbesondere als Hebel ausgestaltet, der vorzugsweise durch eine insbesondere als Tellerfeder ausgestaltete Hebelfeder ausgebildet ist. Die jeweilige Kupplungsscheibe kann über eine Verzahnung mit der jeweiligen Getriebeeingangswelle drehfest, aber axial beweglich verbunden sein. Die jeweilige Kupplungsscheibe kann insbesondere an voneinander wegweisenden axialen Stirnflächen jeweils einen Reibbelag aufweisen, der mit einem gegebenenfalls vorgesehenen Reibbelag der zugehörigen Gegenplatte und/oder Anpressplatte reibschlüssig in Kontakt kommen kann, um die jeweilige Kupplung zu schließen. Die jeweilige Kupplungsscheibe kann über eine Verzahnung mit der jeweiligen Ausgangswelle drehfest, aber axial beweglich verbunden sein.

Alternativ kann für die jeweilige Reibungskupplung die zugeordnete Gegenplatte durch ein separates Bauteil ausgebildet werden, so dass sich eine Doppelkupplung nach dem "Vier-Platten-Design" ergibt.

Die Doppelkupplung bzw. das Zweimassenschwungrad kann/ können insbesondere mit einem motorseitig vorgelagerten und/oder getriebeseitig nachgelagerten Schwingungsdämpfer, insbesondere Fliehkraftpendel und/oder Massependel direkt oder indirekt verbunden sein. Ferner kann die jeweilige Kupplungsscheibe insbesondere mit Hilfe eines Scheibendämpfers gedämpft sein. Die Doppelkupplung bzw. das Zweimassenschwungrad können insbesondere über eine starre Scheibe (Driveplate) und/oder eine biegbare und/oder flexible Scheibe (Flexplate) mit der Eingangswelle verbunden sein, wobei die Scheibe Drehmomente übertragen kann, um in die Doppelkupplung das Drehmoment der Eingangswelle einleiten zu können. Durch die flexible Ausgestaltung der Scheibe können axiale auftretende Schwingungen ganz oder teilweise gedämpft oder getilgt werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische Schnittansicht eines eingebauten Kupplungsaggregats in einer ersten Ausführungsform,
- Fig. 2:: eine schematische Schnittansicht eines eingebauten Kupplungsaggregats in einer zweiten Ausführungsform,
- Fig. 3:: eine schematische Schnittansicht eines eingebauten Kupplungsaggregats in einer dritten Ausführungsform,
- Fig. 4:: eine schematische Schnittansicht eines eingebauten Kupplungsaggregats in einer vierten Ausführungsform,
- Fig. 5:: eine schematische Schnittansicht eines eingebauten Kupplungsaggregats in einer fünften Ausführungsform,
- Fig. 6:: eine schematische Schnittansicht eines eingebauten Kupplungsaggregats in einer sechsten Ausführungsform,
- Fig. 7:: eine schematische Schnittansicht eines eingebauten Kupplungsaggregats in einer siebten Ausführungsform,
- Fig. 8:: eine schematische Schnittansicht eines eingebauten Kupplungsaggregats in einer achten Ausführungsform und
- Fig. 9:: eine schematische geschnittene Detailansicht des Kupplungsaggregats aus Fig. 8,
- Fig. 10A und 10B: Beispiel einer Verliersicherung einer Schraube dargestellt anhand des Ausführungsbeispieles nach Fig. 2, wobei Fig. 10A die Schraube während der Kupplungsmontage zeigt und wobei Fig. 10B die Schraube im angezogenen Zustand zeigt,
- Fig. 10C: ein weiteres Beispiel für eine Verliersicherung einer Schraube dargestellt anhand des Ausführungsbeispieles nach Fig. 2,
- Fig. 11: ein schematische Schnittdarstellung eines Kupplungsaggregates in einer weiteren Ausführungsform, welche sehr ähnlich zum Ausführungsbeispiel nach Fig. 4 aufgebaut ist,
- Fig. 12: ein schematische Schnittdarstellung eines Kupplungsaggregates in einer weiteren Ausführungsform, welche sehr ähnlich zum Ausführungsbeispiel nach Fig. 11 aufgebaut ist,
- Fig. 13A: schematische geschnittene und eine schematische räumliche Darstellungen eines Teilbereiches eines Kupplungsaggregates in einer weiteren Ausführungsform, welche sehr ähnlich zum Ausführungsbeispiel nach Fig. 4, 11 und 12 aufgebaut ist im Bereich der Verbindung zwischen ZMS und Kupplung, im Ausgangszustand,
- Fig. 13B: schematische geschnittene und eine schematische räumliche Darstellungen eines Teilbereiches eines Kupplungsaggregates in einer weiteren Ausführungsform, welche sehr ähnlich zum Ausführungsbeispiel nach Fig. 4, 11 und 12 aufgebaut ist im Bereich der Verbindung zwischen ZMS und Kupplung, im ausgerichteten und vorpositionierten Zustand,
- Fig. 13C: schematische geschnittene und eine schematische räumliche Darstellungen eines Teilbereiches eines Kupplungsaggregates in einer weiteren Ausführungsform, welche sehr ähnlich zum Ausführungsbeispiel nach Fig. 4, 11 und 12 aufgebaut ist im Bereich der Verbindung zwischen ZMS und Kupplung, in Endposition zusammengeschoben,
- Fig. 13D: schematische geschnittene und eine schematische räumliche Darstellungen eines Teilbereiches eines Kupplungsaggregates in einer weiteren Ausführungsform, welche sehr ähnlich zum Ausführungsbeispiel nach Fig. 4, 11 und 12 aufgebaut ist im Bereich der Verbindung zwischen ZMS und Kupplung, mit angezogenen Schrauben

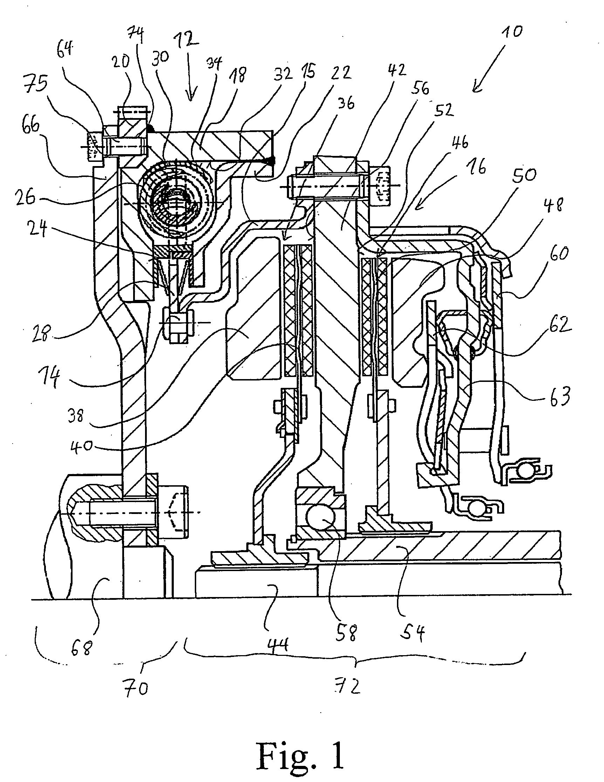

Das in Fig. 1 dargestellte Kupplungsaggregat 10 weist ein Zweimassenschwungrad 12 auf, das über eine als Nietverbindung ausgestaltete feste Befestigung 14 mit einem Mitnehmerring 15 befestigt ist, der mit einer als Doppelkupplung ausgestalteten Kupplung 16 verbunden ist, so dass eine Steckverzahnung zwischen dem Zweimassenschwungrad 12 und der Kupplung 16 eingespart ist. Das Zweimassenschwungrad 12 weist eine im Querschnitt im Wesentlichen L-förmige Primärmasse 18 auf, mit der ein Starterkranz 20 durch Schweißen befestigt ist. Mit der Primärmasse 18 ist ein Deckel 22 durch Schweißen befestigt, der am radial inneren Ende über eine Abdichteinrichtung 24 gegenüber der Primärmasse 18 abgedichtet ist. Dadurch wird ein Raum zwischen der Primärmasse 18 und dem Deckel 22 abgedichtet, in dem eine gefettete Bogenfeder 26 angeordnet werden kann. Die Primärmasse 18 kann ein Drehmoment in die Bogenfeder 26 einleiten, das über eine flanschförmige ebenfalls an der Bogenfeder 26 angreifende Sekundärmasse 28 ausgeleitet werden kann. Die Sekundärmasse 28 verläuft hierzu durch die Abdichteinrichtung 24 hindurch. Die Bogenfeder 26 ist zumindest radial außen durch einen Bogenfederkanal 30 geführt, wobei Schmierfett zwischen dem Bogenfederkanal 30 und der Bogenfeder 26 unnötige Reibungsverluste vermeidet. Die Primärmasse 18 weist eine radial innere Innenkontur 32 auf, die zumindest im Winkelbereich des L-förmigen Querschnitts einer Außenkontur 34 des Bogenfederkanals 30 entspricht, so dass der Bogenfederkanal 30 an der Primärmasse radial zentriert werden kann.

Die Kupplung 16 weist eine erste Reibungskupplung 36 mit einer ersten Anpressplatte 38 auf, die eine erste Kupplungsscheibe 40 gegen eine erste Gegenplatte 42 pressen kann, um reibschlüssig ein Drehmoment an eine erste Getriebeeingangswelle 44 zu übertragen. Zusätzlich weist die Kupplung 16 eine zweite Reibungskupplung 46 mit einer zweiten Anpressplatte 48 auf, die eine zweite Kupplungsscheibe 50 gegen eine zweite Gegenplatte 52 pressen kann, um reibschlüssig ein Drehmoment an eine zweite Getriebeeingangswelle 54 zu übertragen. Im dargestellten Ausführungsbeispiel ist sowohl die erste Gegenplatte 42 als auch die zweite Gegenplatte 52 durch eine gemeinsame Zentralplatte 56 ausgebildet, die über ein Stützlager 58 an der zweiten Getriebeeingangswelle 54 abgestützt ist. Alternativ können die erste Gegenplatte 42 und die zweite Gegenplatte 52 durch separate Bauteile ausgebildet sein. Die erste Anpressplatte 38 kann mit Hilfe eines als Tellerfeder ausgestalteten ersten Betätigungselements 60 bewegt werden, während die zweite Anpressplatte 48 mit Hilfe eines als Tellerfeder ausgestalteten zweiten Betätigungselements 62 bewegt werden kann. Ein Teil der Kupplung 16 kann mit Hilfe eines mit der Zentralplatte 56 befestigten Kupplungsdeckels 63 abgedeckt und abgestützt werden.

Das Zweimassenschwungrad 12 ist mit Hilfe eines als Schraube ausgestalteten Endmontagemittels 64 mit einer im Wesentlichen starren Schwungscheibe 66 verbunden, die mit einer insbesondere als Kurbelwelle eines Kraftfahrzeugverbrennungsmotors ausgestalteten Antriebswelle 68 verbunden ist. Durch das Endmontagemittel 64 kann eine mit der Antriebswelle 68 vormontierte motorseitige Baugruppe 70 mit einer mit den Getriebeeingangswellen 44, 54 vormontierten getriebeseitigen Baugruppe 72 verbunden werden. Im in Fig. 1 dargestellten Ausführungsbeispiel ist sowohl die Kupplung 16 als auch das Zweimassenschwungrad 12 der getriebeseitigen Baugruppe 72 zugeordnet, so dass die motorseitige Baugruppe 70 lediglich die Antriebswelle 68 und die Schwungscheibe 66 aufweist.

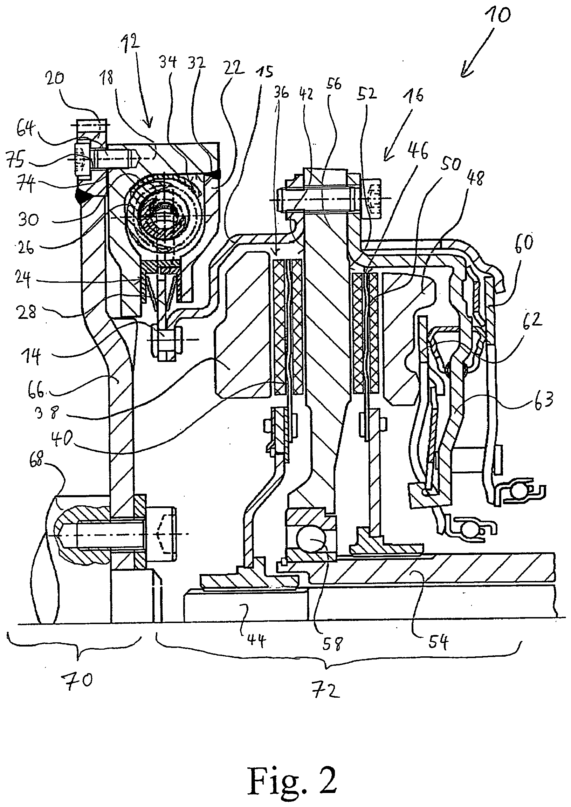

Bei der in Fig. 2 dargestellten Ausführungsform des Kupplungsaggregats 10 ist im Vergleich zu der in Fig. 1 dargestellten Ausführungsform des Kupplungsaggregats 10 der Starterkranz 20 nicht mit der Primärmasse 18 sondern mit den Schwungrad 66 verschweißt. Ein Innengewinde 74 zur Befestigung des Endmontagemittels ist dadurch nicht in dem Starterkranz 20 sondern in der Primärmasse 18 vorgesehen. Der Starterkranz 20 weist hierzu lediglich ein Durchgangsloch 75 auf, das in der in Fig. 1 dargestellten Ausführungsform des Kupplungsaggregats 10 im Schwungrad 66 vorgesehen ist.

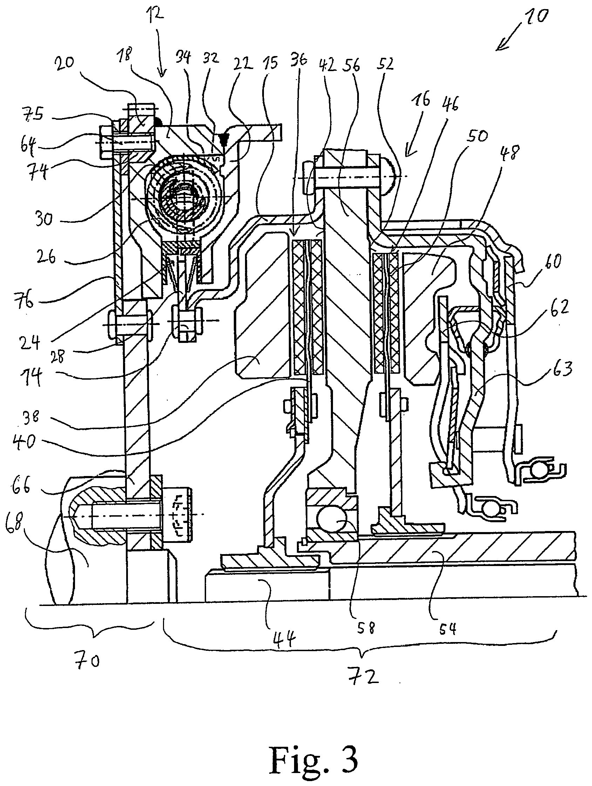

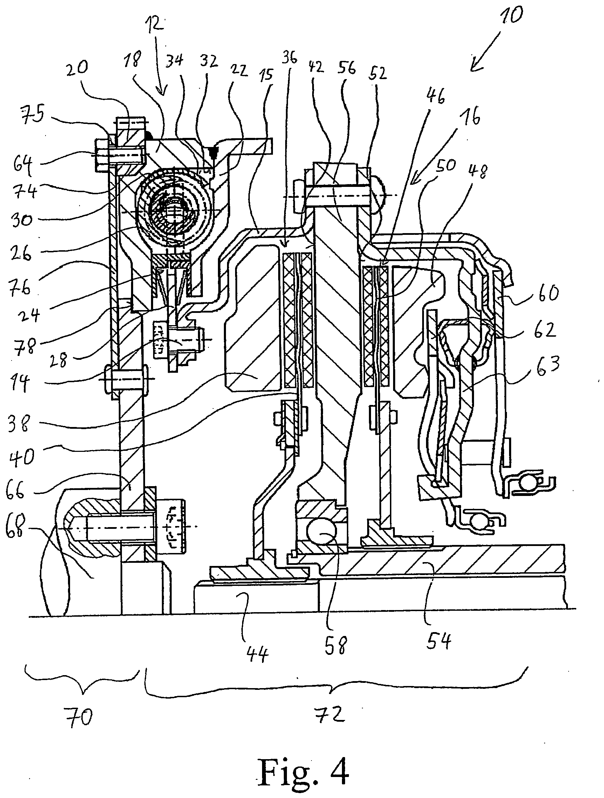

Bei der in Fig. 3 dargestellten Ausführungsform des Kupplungsaggregats 10 ist im Vergleich zu der in Fig. 1 dargestellten Ausführungsform des Kupplungsaggregats 10 das Schwungrad 66 über ein als Flexplate ausgestaltetes Federblech 76 mit Hilfe des Endmontagemittels 64 mit der Primärmasse 18 verbunden, so dass mit Hilfe des Federblechs 76 Axialschwingungen gedämpft werden können. Wie in Fig. 4 dargestellt, kann das Federblech 76 auch derart verspannt werden, dass das Federblech 76 wie ein starrer Körper wirkt, so dass durch das im Vergleich zur Schwungscheibe 66 dünnere Federblech 76 Bauraum in axialer Richtung eingespart ist. Hierzu weist die Primärmasse 18 einen Axialanschlag 78 auf, der mit einer durch das Federblech 76 aufgebrachten hinreichenden Normalkraft an der Schwungscheibe 66 anliegt. Ferner ist in dem dargestellten Ausführungsbeispiel die feste Befestigung 14 als Schraubenverbindung ausgeführt.

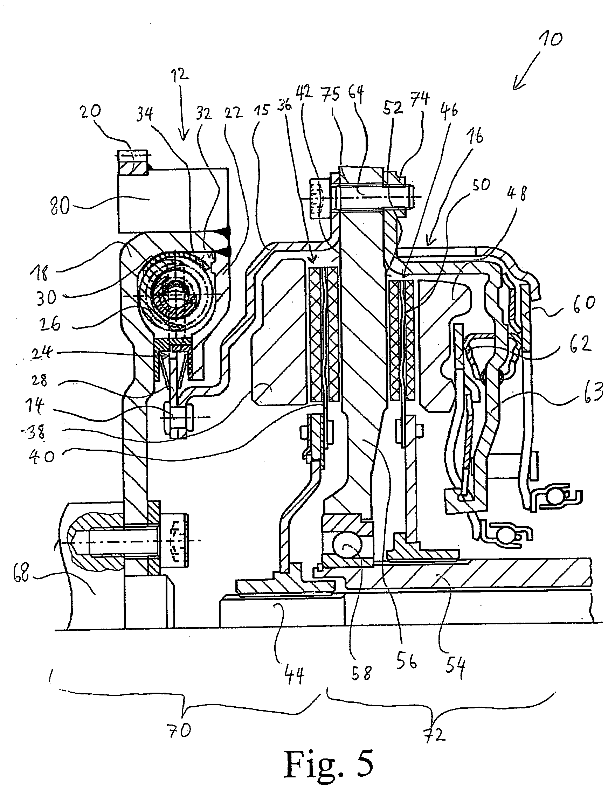

Bei der in Fig. 5 dargestellten Ausführungsform des Kupplungsaggregats 10 ist im Vergleich zu der in Fig. 1 dargestellten Ausführungsform des Kupplungsaggregats 10 das Zweimassenschwungrad 12 der motorseitigen Baugruppe 70 zugeordnet. Für die Verbindung der motorseitigen Baugruppe 70 mit der getriebeseitigen Baugruppe 72 wird der der motorseitigen Baugruppe 70 zugeordnete Mitnehmerring 15 mit der der getriebeseitigen Baugruppe 72 zugeordneten Zentralplatte 56 verbunden. Hierzu ist das Endmontagemittel 64 als in axialer Richtung ausgerichtete Schraube ausgestaltet, die durch ein in der Zentralplatte ausgebildetes Durchgangsloch 75 hindurchgeführt und mit einem in dem Kupplungsdeckel 63 ausgebildetem Innengewinde 74 verschraubt ist. Um eine einfache Zugänglichkeit für das Endmontagemittel 64 zu erreichen, ist zwischen dem Starterkranz 20 und der Primärmasse 18 eine Montageöffnung 80 vorgesehen, um mit einem Werkzeug durch die Montageöffnung 80 hindurch das Endmontagemittel 64 montieren zu können. Der Mitnehmerring 15 kann auch durch ein radial ausgerichtetes Endmontagemittel 64 mit der Zentralplatte 56 verbunden werden, wobei in diesem Fall die Montageöffnung 80 nicht erforderlich ist. Ferner ist im dargestellten Ausführungsbeispiel die Primärmasse 18 direkt mit der Antriebswelle 68 montiert. Eine Schwungscheibe 66 als separates Bauteil ist dadurch vermieden. Die Primärmasse 18 kann in dieser Ausführungsform gleichzeitig die Schwungscheibe 66 als einstückiges Bauteil ausbilden.

Weiterhin kann das Verbindungsmittel "schräg", als unter einem Winkel zwischen axial und radial angerichtet sein.

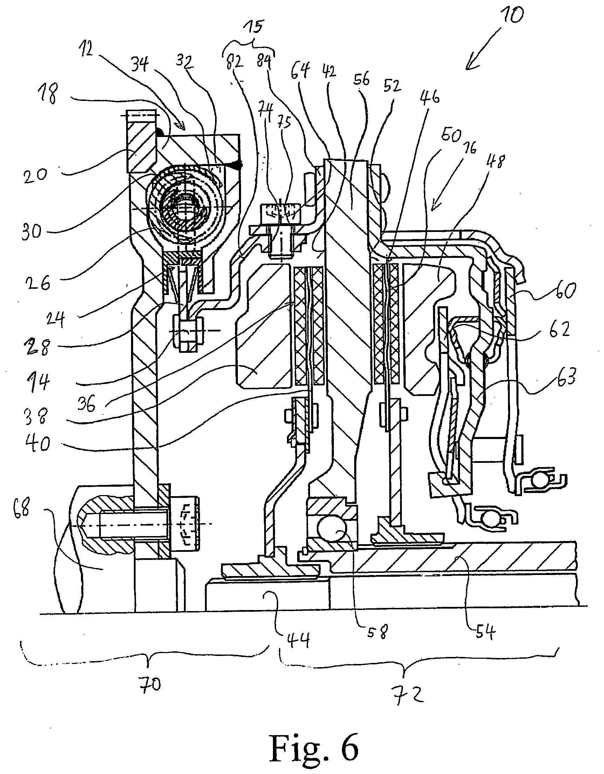

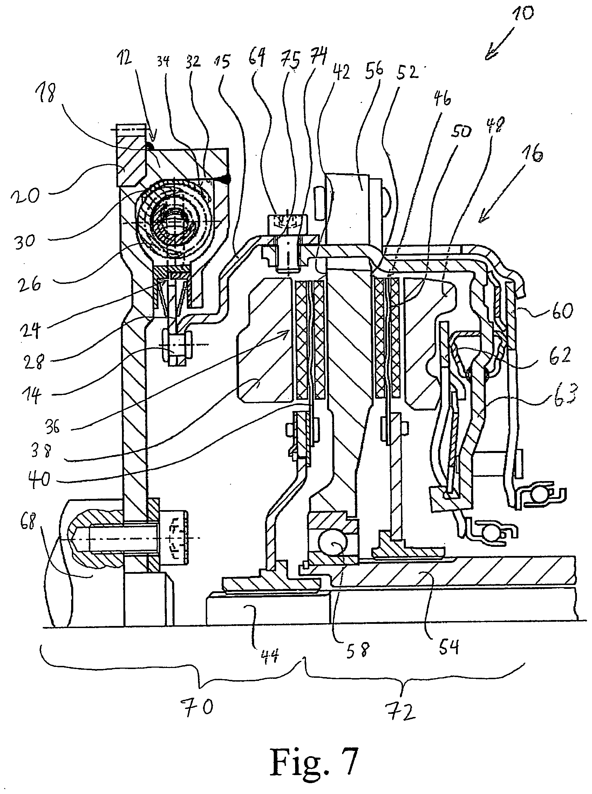

Bei der in Fig. 6 dargestellten Ausführungsform des Kupplungsaggregats 10 ist im Vergleich zu der in Fig. 5 dargestellten Ausführungsform des Kupplungsaggregats 10 das Endmontagemittel 64 nicht axial sondern radial ausgerichtet. Zusätzlich ist der Mitnehmerring 15 in einen mit der Sekundärmasse 28 über die feste Befestigung 14 befestigten ersten Teilring 82 und einen mit der Zentralplatte 56 befestigten zweiten Teilring 84 unterteilt. Der erste Teilring 82 ist mit dem zweiten Teilring 84 über das Endmontagemittel 64 verbunden. Wie in Fig. 7 dargestellt, kann der Mitnehmerring 15 auch einstückig ausgeführt sein und vergleichbar zu der in Fig. 6 dargestellten Ausführungsform über das radial ausgerichtete Endmontagemittel 64 mit dem Kupplungsdeckel 63 verbunden sein. Insbesondere bei der im Wesentlichen radialen Ausrichtung des Endmontagemittels 64 ist das Endmontagemittel 64 mit Hilfe einer Verliersicherung gegen ein unbeabsichtigtes Lösen, insbesondere unter Fliehkrafteinfluß, gesichert.

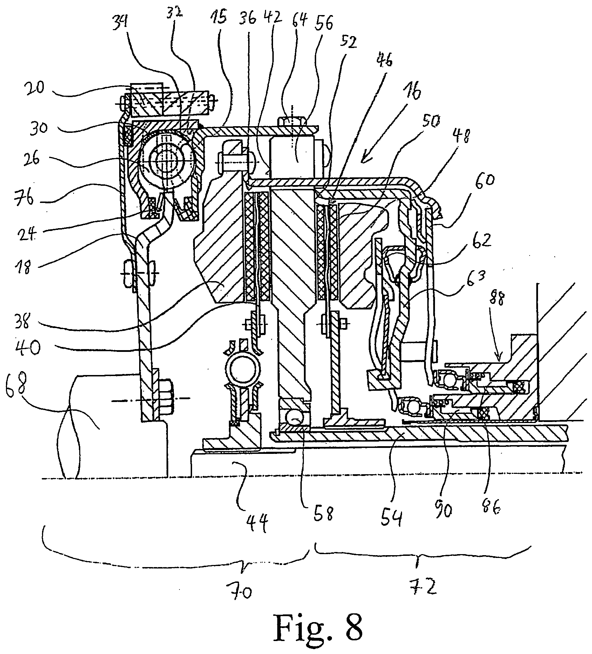

Bei der in Fig. 8 dargestellten Ausführungsform des Kupplungsaggregats 10 ist im Vergleich zu der in Fig. 3 dargestellten Ausführungsform des Kupplungsaggregats 10 das Zweimassenschwungrad 12 invers ausgeführt. Das heißt die Primärmasse 18 ragt von radial innen in einen durch die beim Ausführungsbeispiel nach Fig. 8 aus dem Bogenfederkanal gebildete Sekundärmasse 30, 34 und dem mit dieser Sekundärmasse 30, 34 durch Schweißen verbundenen Mitnehmerring 15 ausgebildeten Raum hinein, in dem die Bogenfeder 26 angeordnet ist. Der Mitnehmerring 15 bildet aufgrund der inversen Betriebsweise des Zweimassenschwungrads 12 in dieser Ausführungsform gleichzeitig einen Deckel 22 für das Zweimassenschwungrad 12 aus, so dass der Mitnehmerring 15 und der Deckel 22 einstückig ausgeführt sind. Auch bei dieser Ausgestaltung des Zweimassenschwungrads 12 kann der Mitnehmerring 15 besonders einfach mit der Zentralplatte 56 oder mit dem Kupplungsdeckel 63 durch ein radial ausgerichtetes Endmontagemittel 64 verbunden werden. Ferner kann der Starterkranz 20 mit der Primärmasse 18 über ein als Flexplate ausgestaltetes Federblech 76 verbunden sein.

Das erste Betätigungsmittel 60 der vorstehend dargestellten Kupplungsaggregate 10 kann durch einen hydraulisch betätigbaren ersten Betätigungszylinder 86 einer Betätigungseinrichtung 88 betätigt werden, während das zweite Betätigungsmittel 62 der vorstehend dargestellten Kupplungsaggregate 10 durch einen hydraulisch betätigbaren zweiten Betätigungszylinder 86 der Betätigungseinrichtung 88 betätigt werden kann. Der erste Betätigungszylinder 86 und der zweite Betätigungszylinder 90 sind insbesondere in Umfangsrichtung ringförmig umlaufend ausgestaltet, wobei vorzugsweise der zweite Betätigungszylinder 90 radial innerhalb zu dem ersten Betätigungszylinder 86 oder umgekehrt angeordnet ist. Die Betätigungseinrichtung 88 kann dadurch entsprechend Bauraum sparend und kompakt aufgebaut sein.

Die vorstehenden Ausführungsformen der Kupplungsaggregate wurden am Beispiel einer Doppelkupplung nach dem "Drei-Platten-Design" erläutert. Es ist auch möglich die vorstehenden Anordnungen des Endmontagemittels bei einer einfachen Reibungskupplung oder einer Doppelkupplung nach dem "Vier-Platten-Design" vorzusehen. Ferner ist es möglich statt schwenkbarer Betätigungselemente 60, 62 direkt betätigte Betätigungselemente zu verwenden, die nicht um einen Schwenkpunkt verschwenkt werden und deren Betätigungsweg ausgenommen eines durch elastische Biegung verursachten Anteils dem von dem zugeordneten Betätigungszylinder 86, 90 bereitgestellten Betätigungsweg entspricht.

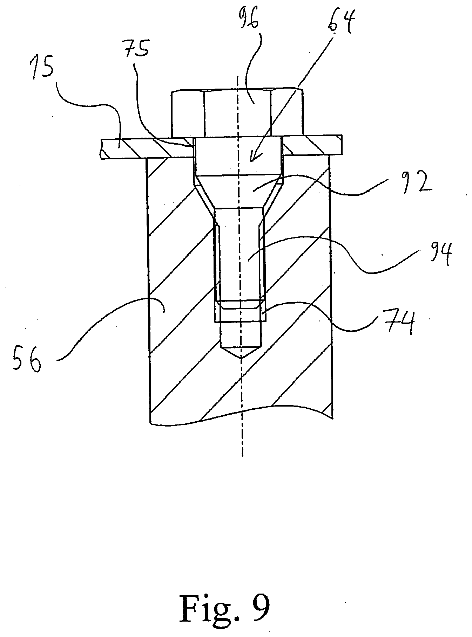

Wie in Fig. 9 dargestellt kann das Endmontagemittel 64 einen Zentrierkonus 92 aufweisen, um die zu verbindenden Bauteile, beispielsweise den Mitnehmerring 15 und die Zentralplatte 56 bei der Montage automatisch zueinander auszurichten. Das Endmontagemittel 64 ist beispielsweise als Schraube mit einem Schraubenschaft 94 und einem Schraubenkopf 96 ausgestaltet, wobei der Zentrierkonus 92 zwischen dem Schraubenschaft 94 und dem Schraubenkopf 96 angeordnet sein kann. Beim Verschrauben des Schraubenschafts 94 mit dem Innengewinde 74 der Zentralplatte 56 kann der Zentrierkonus an dem Durchgangsloch 75 des Mitnehmerrings 15 abgleiten und dadurch den Mitnehmerring 15 und damit die motorseitige Baugruppe 17 automatisch zur Zentralplatte 56 und damit zur getriebeseitigen Baugruppe 72 ausrichten.

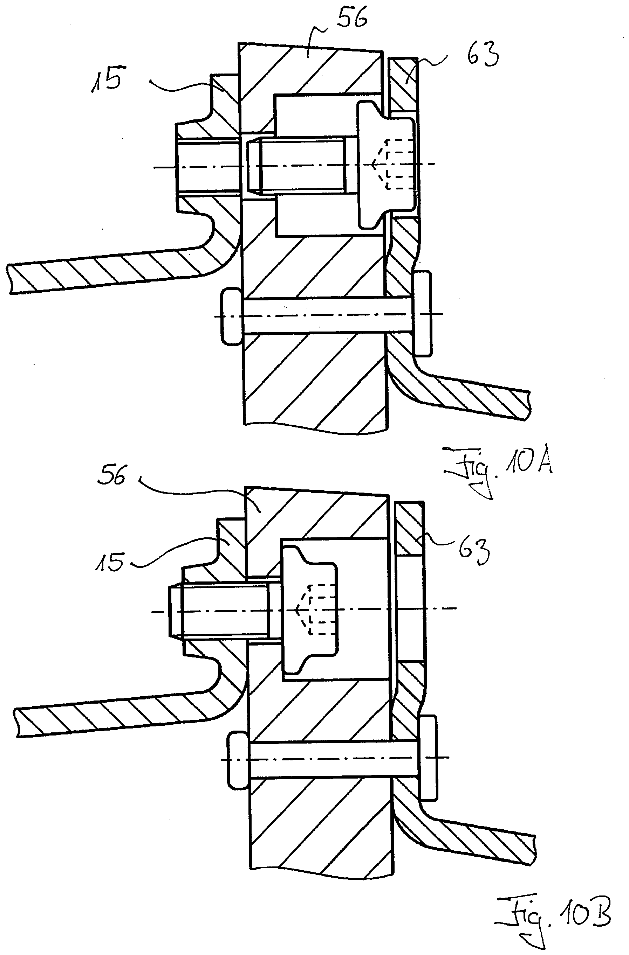

Nachfolgend wird anhand der Fig. 10A bis 10C, 11, 12 und 13A bis 13D eine Verliersicherung der Schrauben (als einem Beispiel der Endmontagemittel) während der Montage beschrieben. Mit dieser Verliersicherung kann erreicht werden, dass - wenn die Endmontagemittel (z.B. Schrauben) bereits vor dem Zusammenfügen der motorseitigen Baugruppe (z.B. dem ZMS) und der getriebeseitigen Baugruppe (z.B. der Doppelkupplung) mit einer der Baugruppen verbunden sind - diese nicht separat in die Kupplungsglocke eingebracht werden müssen. Dies reduziert den Endmontageaufwand, vermindert das Risiko, dass die Elemente unkontrolliert in die Kupplungsglocke fallen und senkt die Anforderungen an die Montageöffnungen in der Kupplungsglocke. Durch die Schrauben, die bereits an einem Bauteil befestigt und durch dieses vorpositioniert werden, können die Montageöffnungen kleiner ausfallen, da die Öffnungen nur für den Werkzeugzugang benötigt werden und kein großer Sichtbereich freigelegt werden muss, wie dies beispielsweise für das nachträgliche Einbringen der Endmontagemittel erforderlich wäre. Außerdem kann bei vorpositionierten Schrauben die Eingriffsrichtung für das Werkzeug deutlich stärker von der koaxialen Richtung abweichen als bei nachträglich eingebrachten Schrauben. Die vorpositionierten Schrauben lassen sich z.B. leichter mit Werkzeugen mit Kardanikfunktion anschrauben, bei denen die Drehachse am Werkzeuggriff von der Drehachse der Schraube abweicht.

Die Fig. 10A und 10B einerseits und 10C andererseits zeigen zwei Beispiele, wie die Verliersicherung und Vorpositionierung der Schrauben auf einfache Weise durch die ohnehin in der Doppelkupplung vorhandenen Bauteile realisiert werden kann. Gezeigt ist die Trennstelle zwischen Mitnehmerring und Zentralplatte, bei der die Schrauben durch die Zentralplatte und den Kupplungsdeckel gesichert und vorpositioniert werden. Wenn die Schrauben, wie in den Abbildungen gezeigt, so weit in die Baugruppe, mit der sie durch die Verliersicherung verbunden sind, hineingeschoben werden können, dass der Gewindeanfang komplett unter die Trennebene abtauchen kann, schützt dies die Schraube und die Gewindegänge an der anderen Baugruppe, während dem Zusammenfügen und Ausrichten von Motor und Getriebe.

Um die Grundausrichtung der beiden Baugruppen sicherzustellen, könne die beiden Baugruppen spezielle Schnittstellengeometrien aufweisen, die nur in der richtigen Position gefügt werden können und robuster sind als die Gewinde (z.B. Passstifte und Passlöcher). Ein weiterer Vorteil der begrenzt axial in der Verliersicherung verschieblichen Schrauben besteht darin, dass die beiden Baugruppen zuerst bis auf ihre Endposition zusammengefügt werden können und man erst anschließend mit dem Einschrauben und Anziehen der Schrauben beginnen muss. Bei Schrauben ohne axiale Verschieblichkeit in der Verliersicherung, muss bereits bei allen Schrauben gleichmäßig mit dem Einschrauben begonnen werden, während sich die Baugruppen auf dem letzten Stück ihrer Endposition nähern.

Die Fig. 10A bis 10C sollen nur beispielhaft erläutern, wie eine Verliersicherung ausgeführt werden kann. Während in den Abbildungen der Bewegungsraum für den Schraubenkopf hauptsächlich durch die Zentralplatte gebildet wird, kann dies auch durch Blechbauteile übernommen werden. Das zugrunde liegende Prinzip ist somit an allen Tennstellen und Trennpositionen zwischen der motorseitigen Baugruppe und der getriebeseitigen Baugruppe realisierbar.

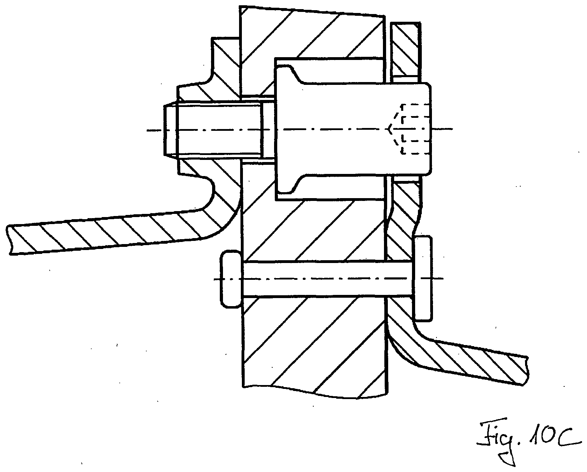

Zudem zeigt Fig. 10C eine Schraube, deren Antriebsgeometrie an Schraubenkopf immer besonderst gut zugänglich ist. Dies ist besondert empfehlenswert für Schrauben, die aus einer ungünstigen Zugangsposition angezogen werden müssen. Statt einem verlängerten Kopf, kann die Zugänglichkeit auch durch einen radial angeordneten Schlitz in den, den Bewegungsraum für den Schraubenkopf bildenden Bauteilen, verbessert werden. Solange der Schlitz breiter als das Werkzeug, aber schmaler als die Schraube ist, ist trotz Schlitz ein Verlust der Schraube ausgeschlossen.

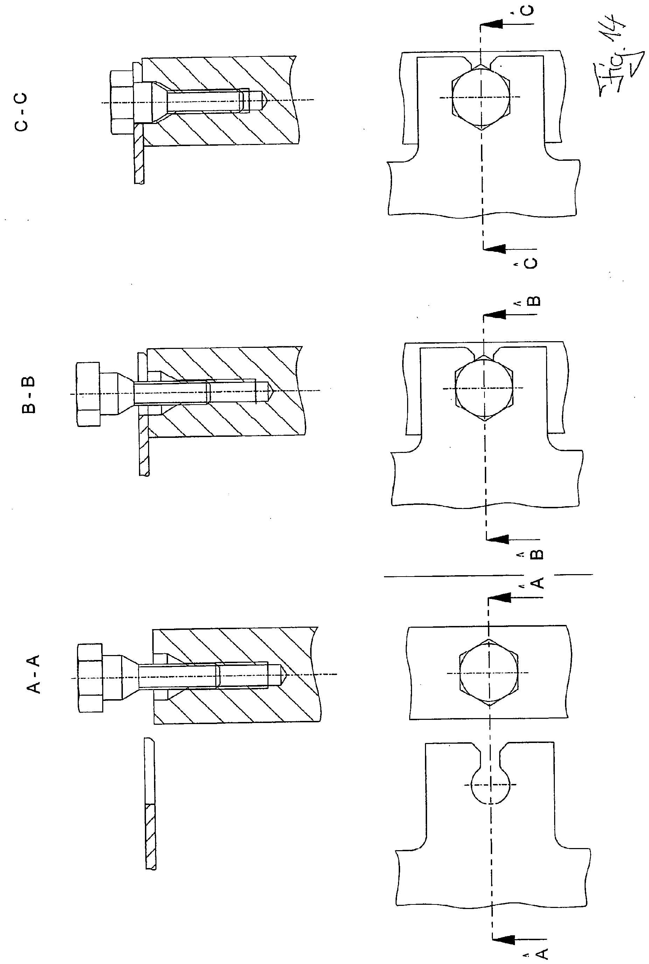

In Fig. 14 ist eine Ausführungsform mit Verschraubung mit vormontierten Schrauben gezeigt, ausgeführt für das Ausführungsbeispiel nach Fig. 8 und 9, welche eine Verschraubung mit Zentrierkonus zeigt. Dabei zeigt Fig. 14A den Ausgangszustand vor der Endmontage, Fig. 14B den Zustand, in dem die Baugruppen zusammengefügt, aber noch nicht verschraubt sind, und Fig. 14C den Endzustand mit verschraubten Baugruppen (wenn mindestens eine Schraube über einen Zentrierkonus verfügt und auf die Lochgeometrie abgestimmt ist, werden die Baugruppen während des Verschraubens ausgerichtet). Werden bei einer radialen Verschraubung die sonst üblichen Durchgangslöcher nicht komplett rund ausgeführt, sondern sind über einen sich axial erstreckenden Schlitz mit der Stirnseite des Bauteils verbunden, können diese so geschlitzten Bauteile unter die lose, in die mit dem Gewinde versehen Nachbarbauteile eingeschraubten Schrauben, geschoben werden. Somit können die Schrauben bereits vor der Montage von Motor und Getriebe in die Gewinde einer der Unterbaugruppen eingeschraubt werden und müssen nach der Paarung mit der Nachbarbaugruppe nur noch festgezogen werden. Das nachträgliche Einbringen von Endmontagemitteln in die Kupplungsglocke kann so entfallen. Bei der in Fig. 14 gezeigten Verliersicherung kann die Verbindung zwischen Mitnehmerring und Zentralplatte gelöst werden, wobei auch in gelöstem Zustand die Schraube(n) in der Bohrung der Zentralplatte gehalten wird über die Bohrung mit kleinerem Durchmesser im Kupplungsdeckel.

Das anhand Fig. 14A bis C hier für radial angeordnete Verschraubungen gezeigte Prinzip, kann auch auf axial angeordnete Verschraubungen übertragen werden. Wenn die seitlich von den Durchgangslöchern wegführenden Schlitz tangential angeordnet werden und in Aussparungen enden, in die die Schraubenköpfe nach dem Zusammenschieben der beiden Baugruppen hineinragen können, können die Schrauben durch verdrehen der beiden Baugruppen relativ zueinander von den Aussparungen durch die Schlitze in die Durchgangslöcher verschoben werden. In den Durchgangslöchern können die Schrauben dann festgezogen werden, und richten dabei, wenn sie mit einem Zentrierkonus versehen sind, die beiden zu verbindenden Baugruppen aus.

Die Fig. 10 A bis 10C und 14A bis 14C zeigen also Ausführungsbeispiele, bei denen Verliersicher eingebrachte Schrauben, die nicht separat in die Kupplungsglocke eingebracht werden müssen, da sie durch die Verliersicherung schon vorpositioniert mit einem der Kupplungskomponenten verbunden sind, was sich besonders für schwer zugängliche Verschraubungspositionen eignet. Da die Schraube bereits grob geführt und ausgerichtet ist bevor dies das Gewinde übernimmt, muss diese Schraube nicht von einem koaxial angeordneten Werkzeug eingeschraubt werden. Dies ermöglicht u.a. schräg auf die Schraubenposition ausgerichtete Werkzeuge und Montageöffnungen. Für diesen Zweck zeigen diese Abbildungen eine verliersichere Schraube, bei der die Zugänglichkeit zur Antriebsgeometrie am Schraubenkopf weder im losen noch im angezogenen Zustand durch die, die Schraube haltenden Bauteile, eingeschränkt wird.

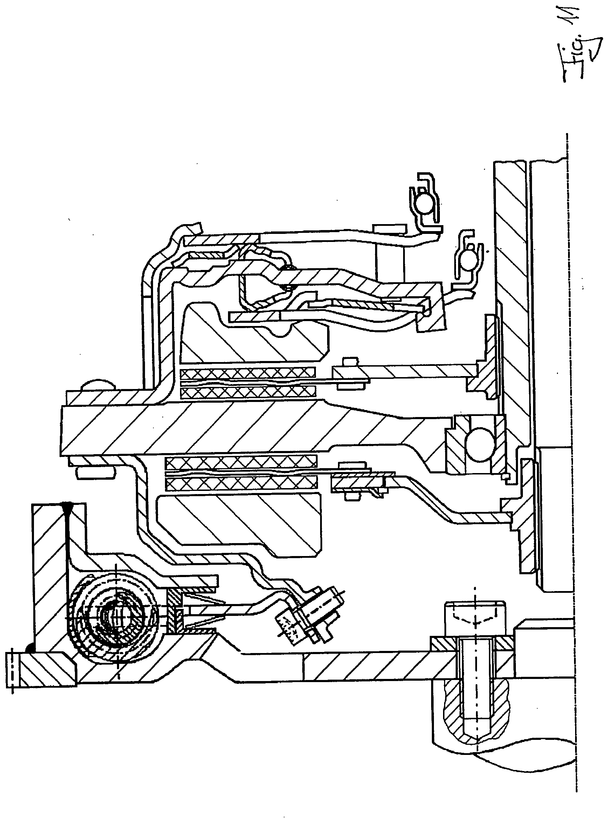

Außer an den bereits vorstehend beschriebenen Stellen kann eine verschraubbare Verbindung auch zwischen dem ZMS-Flansch und dem Mitnehmerring realisiert werden. Um eine Zugänglichkeit zu dieser relativ weit im Inneren des Gesamtaggregats liegenden Trennstelle zu ermöglichen, ist mindestens eine Montageöffnung im motorseitigen Bereich der Kupplungsglocke erforderlich. Des Weiteren muss die ZMS-Primärseite Montageöffnungen aufweisen und die Schrauben sollte nach Möglichkeit schräg zur Kupplungsdrehachse angeordnet sein, so dass die Schraubenköpfe in Richtung der vorzugsweise schräg außen angeordneten Montageöffnungen zeigen. Eine derartige Anordnung ist in den Fig. 11, 12 und 13Abis 13D gezeigt.

So zeigt Fig. 11 die verschraubbare Trennstelle zwischen dem ZMS-Flansch und dem Mitnehmerring der Doppelkupplung, wobei durch Montageöffnungen in der ZMS-Primärseite und an dem motorseitigen Teil des Kupplungsgehäuses die Verbindungsschrauben nach dem Zusammenfügen von Motor und Getriebe in die Verbindungsstelle eingebracht und ZMS-Flansch und Doppelkupplung verschraubt werden können. Dabei werden die Schrauben vorzugsweise wie abgebildet schräg zur Kupplungsdrehachse angeordnet, um die Schrauben von schräg außen anziehen zu können.

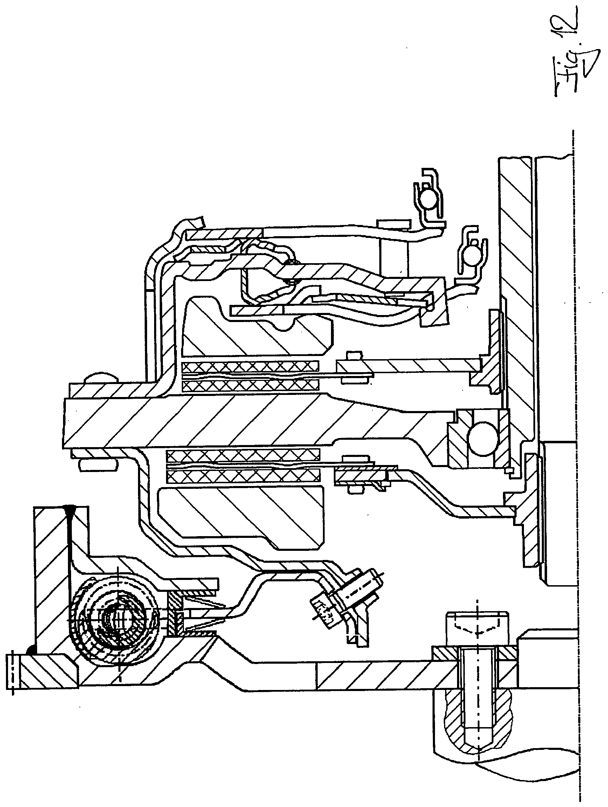

Systembedingt wird es durch die Motorkontur kaum möglich sein, alle auf dem Umfang angeordneten Schrauben gleichzeitig anzuziehen. Wenn man die Schrauben nacheinander anzieht, ist darauf zu achten, dass bereits die erste angezogene Schraube die Bauteile richtig ausgerichtet fixiert. Aus diesem Grund ist es sinnvoll, wenn sich die Nachbarbauteile nicht direkt an der konischen Fläche unter den Schrauben berühren können, sondern die Kontaktflächen zwischen dem ZMS-Flansch und dem Mitnehmerring winklig zur Aufstandsfläche des Schraubenkopfes angeordnet sind. Dadurch richten sich die Bauteile beim Anziehen der Schraube selbstständig aus (Die Bauteile werden während des Anziehens sich so lange gegeneinander verschieben, bis beide Kontaktstellen und der Schraubenkopf Kontakt zu ihren Nachbarbauteilen haben.). In der in Fig. 12 abgebildeten Kupplung ist dies durch eine zylindrische in radialer Richtung wirkende Kontaktfläche (parallel zur Drehachse der Kupplung) und eine ebene in axialer Richtung wirkende Kontaktfläche (orthogonal zur Drehachse der Kupplung) realisiert.

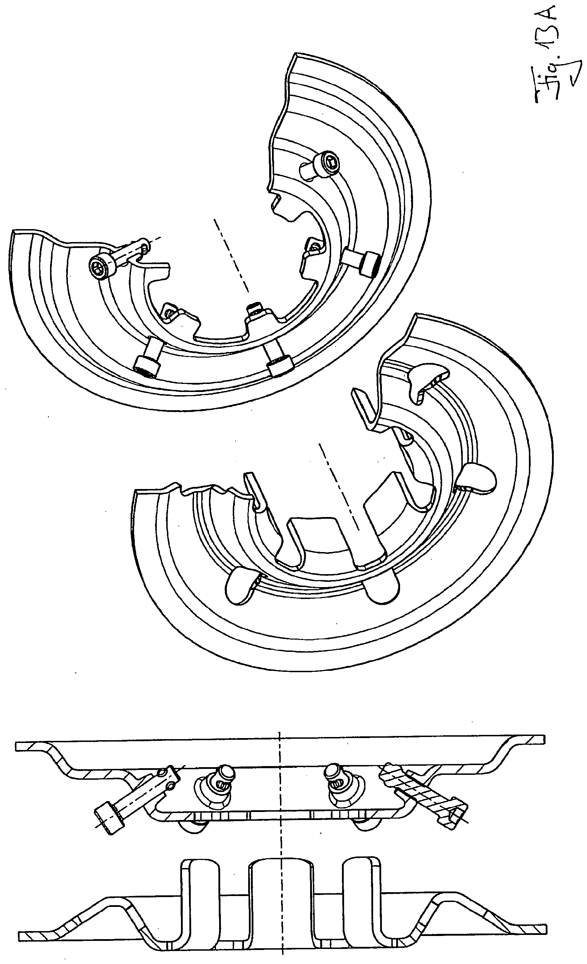

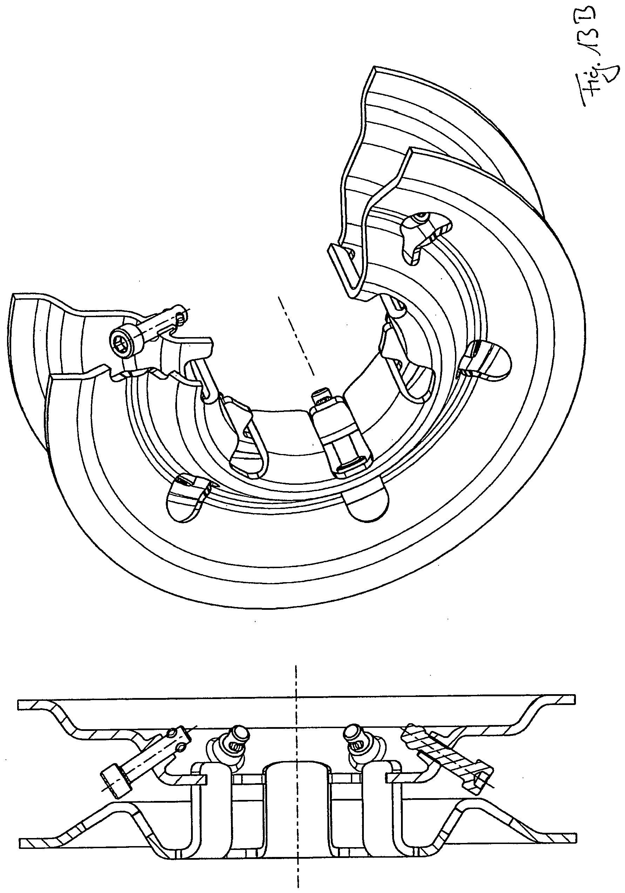

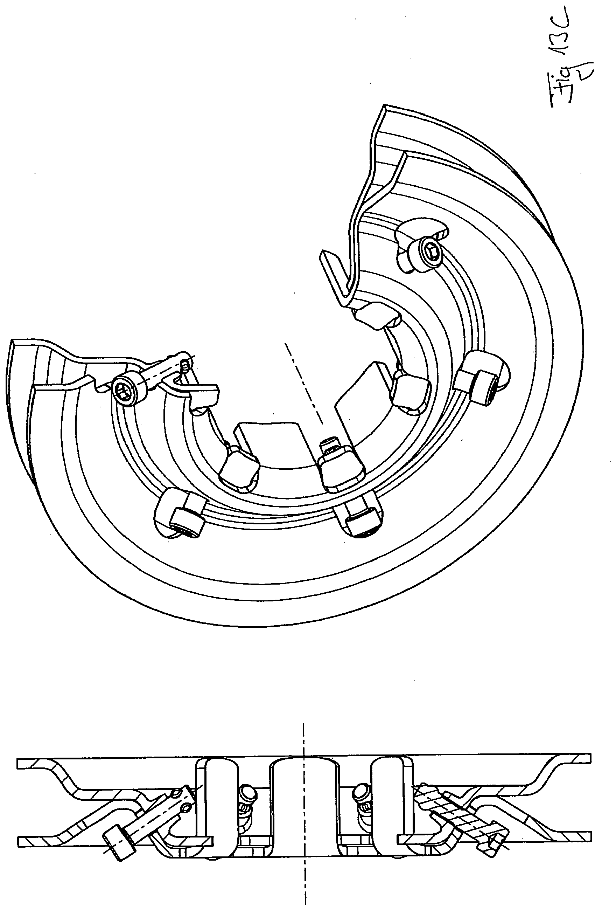

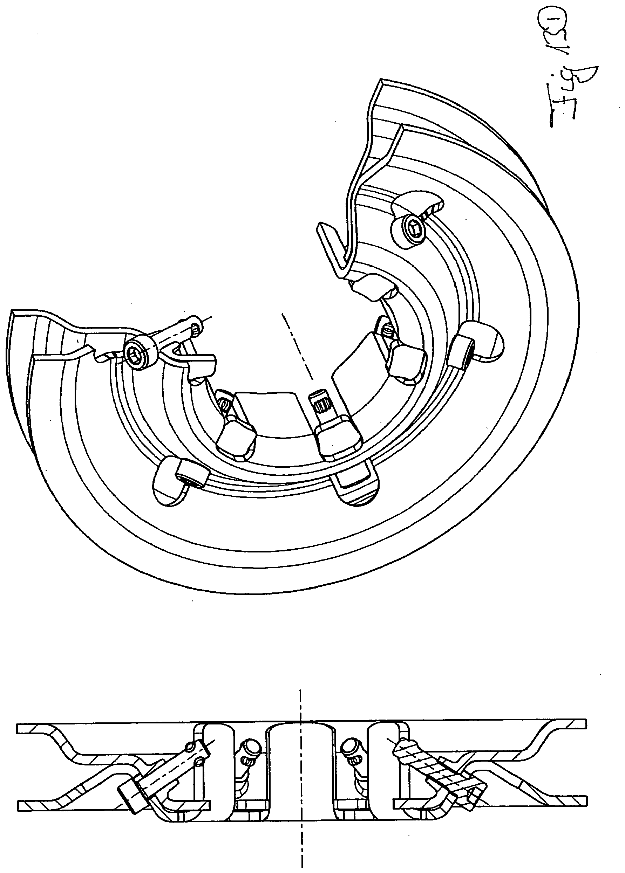

Wenn die in radialer Richtung wirkende Kontaktstelle (gilt auch für eine tangential wirkende Zentrierung der Fig. 13A bis 13D) axial so lang ist, dass sie auch bei nicht richtig ausgerichteten Bauteilen an genügend über dem Umfang verteilten Stellen wirksam wird, um ein radiales Auswandern der Bauteile in alle radialen Richtungen während des Anziehens der ersten Schraube zu verhindern, kann sie die komplette Ausrichtefunktion zusammen mit der Kegelfläche im Bereich der Verschraubung übernehmen. Die axialen Anschlagflächen sind dann nicht erforderlich.

Da diese Verschraubungsposition besonderst weit innen im Kupplungsaggregat liegt, sind hier verliergesicherte Schrauben besonders zu empfehlen. Die Fig. 13A bis 13D zeigen symbolhaft eine solche Variante und deren Montageschritte. Die Schrauben sind bereits vor der Endmontage in den Mitnehmerring eingeschraubt und können zusätzlich noch gegen ein ungewolltes komplettes Herausschrauben gesichert werden (z.B. durch verprägen des Gewindes am Ende der Schraube - in den Abbildungen dargestellt - oder durch Zusatzelemente). Der Ausgangszustand vor Montage von Motor und Getriebe ist in Fig. 13A gezeigt. Bei dem Zusammenfügen der beiden Baugruppen (ZMS und Doppelkupplung) während der Montage von Motor und Getriebe werden die Schrauben durch speziell geformte Öffnungen im ZMS-Flansch (oder ein mit dem ZMS-Flansch verbundenes Bauteil) geschoben, die es den Schraubenköpfen ermöglichen im weit herausgeschraubter Position durch den Flansch hindurchzutauschen und später beim Anziehen der Schrauben auf den Flansch zu treffen und somit die Kraftübertragung zwischen Flansch und Mitnehmerring zu ermöglichen. Diese Öffnungen im ZMS-Flansch können beispielsweise eine einem Schlüsselloch ähnelnde Form aufweisen, wie dies .

Um einen ungewollten Kontakt des Schraubenkopfes mit dem ZMS-Flansch oder anderen Bauteilen während dem Zusammenfügen von Motor und Getriebe zu vermeiden, bei dem die Schraube oder das Gewinde beschädigt werden könnten, ist eine genaue Ausrichtung des ZMS-Flansches und des Mitnehmerrings empfehlenswert, damit die Schrauben direkt und ohne mit dem Flansch zu kollidieren in die Verschraubungsöffnungen eintauchen. Das genaue Ausrichten kann durch einen exakten Montageablauf mit Mess- und Ausrichteprozeduren sichergestellt werden. Noch sicherer ist jedoch, die Vorausrichtung von Flansch und Mitnehmerring durch deren spezielle Geometrie, die eine Ausrichtung der beiden Bauteile ermöglicht (bzw. sicherstellt) bevor die Schraubenköpfe durch die Öffnungen geschoben werden. Wenn durch diese Geometrie das ZMS und die Doppelkupplung nur im ausgerichteten Zustand zusammengeschoben werden können, schützt dies die Schrauben und verhindert, dass ZMS-Flansch und Mitnehmerring beim Anziehen der ersten Schraube in einer falschen Position verbunden werden. Dadurch können die Verbindungsschrauben nacheinander festgezogen werden und müssen nicht gleichzeitig oder mit einer speziellen Strategie

### Bezugszeichenliste

- 10: Kupplungsaggregat
- 12: Zweimassenschwungrad
- 14: feste Befestigung
- 15: Mitnehmerring
- 16: Kupplung
- 18: Primärmasse
- 20: Starterkranz
- 22: Deckel
- 24: Abdichteinrichtung
- 26: Bogenfeder
- 28: Sekundärmasse
- 30: Bogenfederkanal
- 32: Innenkontur
- 34: Außenkontur
- 36: erste Reibungskupplung
- 38: erste Anpressplatte
- 40: erste Kupplungsscheibe
- 42: Gegenplatte
- 44: erste Getriebeeingangswelle
- 46: zweite Reibungskupplung
- 48: zweite Anpressplatte
- 50: zweite Kupplungsscheibe
- 52: zweite Gegenplatte
- 54: zweite Getriebeeingangswelle
- 56: Zentralplatte
- 58: Stützlager
- 60: erstes Betätigungselement
- 62: zweites Betätigungselement
- 63: Kupplungsdeckel
- 64: Endmontagemittels
- 66: Schwungscheibe oder Flexplate oder Driveplate
- 68: Antriebswelle
- 70: motorseitige Baugruppe
- 72: getriebeseitigen Baugruppe
- 74: Innengewinde
- 75: Durchgangsloch
- 76: Federblech
- 78: Axialanschlag
- 80: Montageöffnung
- 82: erster Teilring
- 84: zweiter Teilring
- 86: erster Betätigungszylinder
- 88: Betätigungseinrichtung
- 90: zweiter Betätigungszylinder
- 92: Zentrierkonus
- 94: Schraubenschaft
- 96: Schraubenkopf

## Patentansprüche

1. Kupplungsaggregat zum Kuppeln einer Antriebswelle (68) eines Kraftfahrzeugmotors mit mindestens einer Getriebeeingangswelle (44, 54) eines Kraftfahrzeuggetriebes, mit
einem mit der Antriebswelle (68) verbindbaren Zweimassenschwungrad (12) zur Drehschwingungsdämpfung, wobei das Zweimassenschwungrad (12) eine Primärmasse (18) zum Einleiten eines Drehmoments und eine Sekundärmasse (28) zum Ausleiten eines Drehmoments aufweist, wobei die Primärmasse (18) über eine in einem Bogenfederkanal (30) angeordnete Bogenfeder (26) begrenzt verdrehbar mit der Sekundärmasse (28) gekoppelt ist,
einem mit mindestens einer Getriebeeingangswelle (44, 54) verbindbaren Kupplung (16), insbesondere Doppelkupplung, und
einem Endmontagemittel (64) zum Verbinden der Antriebswelle (68) mit der mindestens einen Getriebeeingangswelle (44, 54) über das Kupplungsaggregat (10),
wobei durch das Endmontagemittel (64) eine mit einer Antriebswelle verbundene Schwungsscheibe direkt oder über einen Starterkranz (20) mit der Primärmasse (18) verbunden ist und die Primärmasse (18) an der Schwungscheibe radial zentriert ist,**dadurch gekennzeichnet, dass** ein Federblech (76) mit Hilfe des Endmontagemittels (64) mit der Primärmasse (18) verbunden ist, wobei die Primärmasse (18) über einen Axialanschlag (78) an eine mit der Antriebswelle (68) verbundenen Schwungscheibe (66), anliegt und das Federblech (76) in axialer Richtung zur Versteifung des Federblechs (76) vorgespannt ist.

2. Kupplungsaggregat zum Kuppeln einer Antriebswelle (68) eines Kraftfahrzeugmotors mit mindestens einer Getriebeeingangswelle (44, 54) eines Kraftfahrzeuggetriebes, mit
einem mit der Antriebswelle (68) verbindbaren Zweimassenschwungrad (12) zur Drehschwingungsdämpfung, wobei das Zweimassenschwungrad (12) eine Primärmasse (18) zum Einleiten eines Drehmoments und eine Sekundärmasse (28) zum Ausleiten eines Drehmoments aufweist,
einem mit mindestens einer Getriebeeingangswelle (44, 54) verbindbaren Kupplung (16), insbesondere Doppelkupplung,
einem Endmontagemittel (64) zum Verbinden der Antriebswelle (68) mit der mindestens einen Getriebeeingangswelle (44, 54) über das Kupplungsaggregat (10) und
einem Mitnehmerring (15) zur Verbindung des Zweimassenschwungrads (12) mit der Kupplung (16), wobei die Kupplung (16) eine Gegenplatte (42, 52) zum reibschlüssigen Verpressen einer Kupplungsscheibe (40, 50) zwischen der Gegenplatte (42, 52) und einer Anpressplatte (38, 48) aufweist,
wobei der Mitnehmerring (15) einen mit der Sekundärmasse (28) verbundenen ersten Teilring (82) und einen mit der Kupplung (16) verbundenen zweiten Teilring (84) aufweist, wobei der erste Teilring (82) und der zweite Teilring (84) durch das Endmontagemittel (64) miteinander verbunden sind, **dadurch gekennzeichnet, dass** der erste Teilring (82) über eine feste Befestigung (14) mit der Sekundärmasse (28) verbunden ist.

3. Kupplungsaggregat nach Anspruch 2 **dadurch gekennzeichnet, dass** das Endmontagemittel (64) im Wesentlichen radial ausgerichtet ist.

4. Kupplungsaggregat nach Anspruch 2 oder 3 **dadurch gekennzeichnet, dass** der zweite Teilring (84) mit einem Kupplungsdeckel (63) der Kupplung (16) zum Abstützen eines Teils der Kupplung (16) oder mit einer Gegenplatte (42, 52) der Kupplung (16) zum reibschlüssigen Verpressen einer Kupplungsscheibe (40, 50) zwischen der Gegenplatte (42, 52) und einer Anpressplatte (38, 48) verbunden ist.

5. Kupplungsaggregat zum Kuppeln einer Antriebswelle (68) eines Kraftfahrzeugmotors mit mindestens einer Getriebeeingangswelle (44, 54) eines Kraftfahrzeuggetriebes, mit
einem mit der Antriebswelle (68) verbindbaren Zweimassenschwungrad (12) zur Drehschwingungsdämpfung, wobei das Zweimassenschwungrad (12) eine Primärmasse (18) zum Einleiten eines Drehmoments und eine Sekundärmasse (28) zum Ausleiten eines Drehmoments aufweist,
einem mit mindestens einer Getriebeeingangswelle (44, 54) verbindbaren Kupplung (16), insbesondere Doppelkupplung,
einem Endmontagemittel (64) zum Verbinden der Antriebswelle (68) mit der mindestens einen Getriebeeingangswelle (44, 54) über das Kupplungsaggregat (16) und
einem Mitnehmerring (15) zur Verbindung des Zweimassenschwungrads (12) mit der Kupplung (16), wobei die Kupplung (16) eine Gegenplatte (42, 52) zum reibschlüssigen Verpressen einer Kupplungsscheibe (40, 50) zwischen der Gegenplatte (42, 52) und einer Anpressplatte (38, 48) aufweist und der Mitnehmerring (15) ein von der Gegenplatte (42, 52) verschiedenes separates Bauteil ist,
wobei der Mitnehmerring (15) über das Endmontagemittel (64) mit der Gegenplatte (42, 52) oder einem Kupplungsdeckel (63) der Kupplung zum Abdecken eines Teils der Kupplung (16) verbunden ist, wobei das Endmontagemittel (64) im Wesentlichen in radialer Richtung oder im Wesentlichen in axialer Richtung ausgerichtet ist, **dadurch gekennzeichnet, dass** die Primärmasse (18) eine in Wesentlichen axial verlaufende durchgehende Montageöffnung (80) zum Hindurchführen des Endmontagemittels (64) vorsieht.

6. Kupplungsaggregat nach einem der Ansprüche 1 bis 5 **dadurch gekennzeichnet, dass** das Endmontagemittel (64) einen Zentrierkonus (92) zum Ausrichten der zu verbindenden Bauteile aufweist.

7. Kupplungsaggregat nach einem der Ansprüche 1 bis 6 **dadurch gekennzeichnet, dass** die Kupplung (16) als Doppelkupplung mit einer ersten Reibungskupplung (36) und einer zweiten Reibungskupplung (46) ausgestaltet ist, wobei die Kupplung (16) eine Zentralplatte (56) aufweist und die Zentralplatte (56) sowohl für die erste Reibungskupplung (36) als auch für die zweite Reibungskupplung (46) eine Gegenplatte (42, 52) zum reibschlüssigen Verpressen einer Kupplungsscheibe (40, 50) zwischen der Zentralplatte (56) und einer der jeweiligen Reibungskupplung (36, 46) zugeordneten Anpressplatte (38, 48) ausbildet.

## Claims

1. Clutch assembly for coupling a drive shaft (68) of a motor vehicle engine to at least one transmission input shaft (44, 54) of a motor vehicle transmission, comprising
a dual-mass flywheel (12) which can be connected to the drive shaft (68) and is intended for damping torsional vibration, wherein the dual-mass flywheel (12) has a primary mass (18) for introducing a torque and a secondary mass (28) for conducting out a torque, wherein the primary mass (18) is coupled, so that it can rotate to a limited degree, via a bow spring (26) arranged in a bow spring channel (30) to the secondary mass (28),
a clutch (16), in particular a dual clutch, which can be connected to at least one transmission input shaft (44, 54), and
a final assembly means (64) for connecting the drive shaft (68) to the at least one transmission input shaft (44, 54) via the clutch assembly (10),
wherein, by virtue of the final assembly means (64), a flywheel connected to a drive shaft is connected directly or via a starter ring (20) to the primary mass (18) and the primary mass (18) is radially centred on the flywheel, **characterized in that** a spring plate (76) is connected to the primary mass (18) with the aid of the final assembly means (64), wherein the primary mass (18) bears via an axial stop (78) against a flywheel (66) connected to the drive shaft (68) and the spring plate (76) is preloaded in the axial direction to stiffen the spring plate (76).

2. Clutch assembly for coupling a drive shaft (68) of a motor vehicle engine to at least one transmission input shaft (44, 54) of a motor vehicle transmission, comprising
a dual-mass flywheel (12) which can be connected to the drive shaft (68) and is intended for damping torsional vibration, wherein the dual-mass flywheel (12) has a primary mass (18) for introducing a torque and a secondary mass (28) for conducting out a torque,
a clutch (16), in particular a dual clutch, which can be connected to at least one transmission input shaft (44, 54),
a final assembly means (64) for connecting the drive shaft (68) to the at least one transmission input shaft (44, 54) via the clutch assembly (10), and
a driver ring (15) for connecting the dual-mass flywheel (12) to the clutch (16), wherein the clutch (16) has a counterplate (42, 52) for frictionally pressing a clutch disc (40, 50) between the counterplate (42, 52) and a pressure plate (38, 48),
wherein the driver ring (15) has a first part-ring (82) connected to the secondary mass (28) and a second part-ring (84) connected to the clutch (16), wherein the first part-ring (82) and the second part-ring (84) are connected to one another by the final assembly means (64), **characterized in that** the first part-ring (82) is connected to the secondary mass (28) via a fixed fastening (14).

3. Clutch assembly according to Claim 2, **characterized in that** the final assembly means (64) is oriented substantially radially.

4. Clutch assembly according to Claim 2 or 3, **characterized in that** the second part-ring (84) is connected to a clutch cover (63) of the clutch (16) for supporting a part of the clutch (16) or to a counterplate (42, 52) of the clutch (16) for frictionally pressing a clutch disc (40, 50) between the counterplate (42, 52) and a pressure plate (38, 48).

5. Clutch assembly for coupling a drive shaft (68) of a motor vehicle engine to at least one transmission input shaft (44, 54) of a motor vehicle transmission, comprising
a dual-mass flywheel (12) which can be connected to the drive shaft (68) and is intended for damping torsional vibration, wherein the dual-mass flywheel (12) has a primary mass (18) for introducing a torque and a secondary mass (28) for conducting out a torque,
a clutch (16), in particular a dual clutch, which can be connected to at least one transmission input shaft (44, 54),
a final assembly means (64) for connecting the drive shaft (68) to the at least one transmission input shaft (44, 54) via the clutch assembly (16), and
a driver ring (15) for connecting the dual-mass flywheel (12) to the clutch (16), wherein the clutch (16) has a counterplate (42, 52) for frictionally pressing a clutch disc (40, 50) between the counterplate (42, 52) and a pressure plate (38, 48) and the driver ring (15) is a separate component which is different from the counterplate (42, 52),
wherein the driver ring (15) is connected via the final assembly means (64) to the counterplate (42, 52) or to a clutch cover (63) of the clutch for covering a part of the clutch (16), wherein the final assembly means (64) is oriented substantially in the radial direction or substantially in the axial direction, **characterized in that** the primary mass (18) provides a substantially axially extending continuous assembly opening (80) for guiding through the final assembly means (64).

6. Clutch assembly according to one of Claims 1 to 5, **characterized in that** the final assembly means (64) has a centring cone (92) for aligning the components to be connected.

7. Clutch assembly according to one of Claims 1 to 6, **characterized in that** the clutch (16) is designed as a dual clutch with a first friction clutch (36) and a second friction clutch (46), wherein the clutch (16) has a central plate (56) and the central plate (56) forms, both for the first friction clutch (36) and for the second friction clutch (46), a counterplate (42, 52) for frictionally pressing a clutch disc (40, 50) between the central plate (56) and a pressure plate (38, 48) assigned to the respective friction clutch (36, 46).

## Revendications

1. Groupe d'embrayage pour l'accouplement d'un arbre d'entraînement (68) d'un moteur de véhicule automobile à au moins un arbre d'entrée de boîte de vitesses (44, 54) d'une boîte de vitesses de véhicule automobile, comprenant
un volant d'inertie à deux masses (12) pouvant être raccordé à l'arbre d'entrée (68) pour l'amortissement des oscillations de rotation, le volant d'inertie à deux masses (12) présentant une masse primaire (18) pour introduire un couple et une masse secondaire (28) pour évacuer un couple, la masse primaire (18) étant accouplée à la masse secondaire (28) de manière à pouvoir tourner dans une mesure limitée par le biais d'un ressort en arc (26) disposé dans un canal de ressort en arc (30),
un embrayage (16) pouvant être raccordé à au moins un arbre d'entrée de boîte de vitesses (44, 54), en particulier un double embrayage, et
un moyen de montage final (64) pour raccorder l'arbre d'entraînement (68) à l'au moins un arbre d'entrée de boîte de vitesses (44, 54) par le biais du groupe d'embrayage (10),
un volant moteur raccordé à un arbre d'entraînement étant raccordé par le moyen de montage final (64) directement ou par le biais d'une couronne de démarreur (20) à la masse primaire (18) et la masse primaire (18) étant centrée radialement sur le volant moteur, **caractérisé en ce qu'**une tôle à ressort (76) est raccordée à la masse primaire (18) à l'aide du moyen de montage final (64), la masse primaire (18) s'appliquant par le biais d'une butée axiale (78) contre un volant moteur (66) raccordé à l'arbre d'entraînement (68) et la tôle à ressort (76) étant précontrainte dans la direction axiale pour rigidifier la tôle à ressort (76).

2. Groupe d'embrayage pour l'accouplement d'un arbre d'entraînement (68) d'un moteur de véhicule automobile à au moins un arbre d'entrée de boîte de vitesses (44, 54) d'une boîte de vitesses de véhicule automobile, comprenant
un volant d'inertie à deux masses (12) pouvant être raccordé à l'arbre d'entrée (68) pour l'amortissement des oscillations de rotation, le volant d'inertie à deux masses (12) présentant une masse primaire (18) pour introduire un couple et une masse secondaire (28) pour évacuer un couple, un embrayage (16) pouvant être raccordé à au moins un arbre d'entrée de boîte de vitesses (44, 54), en particulier un double embrayage,
un moyen de montage final (64) pour raccorder l'arbre d'entraînement (68) à l'au moins un arbre d'entrée de boîte de vitesses (44, 54) par le biais du groupe d'embrayage (10), et
une bague d'entraînement (15) pour raccorder le volant d'inertie à deux masses (12) à l'embrayage (16), l'embrayage (16) présentant une plaque conjuguée (42, 52) pour presser par engagement par friction un disque d'embrayage (40, 50) entre la plaque conjuguée (42, 52) et une plaque de pressage (38, 48),
la bague d'entraînement (15) présentant une première bague partielle (82) raccordée à la masse secondaire (28) et une deuxième bague partielle (84) raccordée à l'embrayage (16), la première bague partielle (82) et la deuxième bague partielle (84) étant raccordées l'une à l'autre par le moyen de montage final (64), **caractérisé en ce que** la première bague partielle (82) est raccordée à la masse secondaire (28) par le biais d'une fixation solide (14).

3. Groupe d'embrayage selon la revendication 2, **caractérisé en ce que** le moyen de montage final (64) est orienté essentiellement radialement.

4. Groupe d'embrayage selon la revendication 2 ou 3, **caractérisé en ce que** la deuxième bague partielle (84) est raccordée à un couvercle d'embrayage (63) de l'embrayage (16) pour supporter une partie de l'embrayage (16), ou à une plaque conjuguée (42, 52) de l'embrayage (16) pour le pressage par engagement par friction d'un disque d'embrayage (40, 50) entre la plaque conjuguée (42, 52) et une plaque de pressage (38, 48).

5. Groupe d'embrayage pour l'accouplement d'un arbre d'entraînement (68) d'un moteur de véhicule automobile à au moins un arbre d'entrée de boîte de vitesses (44, 54) d'une boîte de vitesses de véhicule automobile, comprenant
un volant d'inertie à deux masses (12) pouvant être raccordé à l'arbre d'entrée (68) pour l'amortissement des oscillations de rotation, le volant d'inertie à deux masses (12) présentant une masse primaire (18) pour introduire un couple et une masse secondaire (28) pour évacuer un couple, un embrayage (16) pouvant être raccordé à au moins un arbre d'entrée de boîte de vitesses (44, 54), en particulier un double embrayage,
un moyen de montage final (64) pour raccorder l'arbre d'entraînement (68) à l'au moins un arbre d'entrée de boîte de vitesses (44, 54) par le biais du groupe d'embrayage (16), et
une bague d'entraînement (15) pour raccorder le volant d'inertie à deux masses (12) à l'embrayage (16), l'embrayage (16) présentant une plaque conjuguée (42, 52) pour presser par engagement par friction un disque d'embrayage (40, 50) entre la plaque conjuguée (42, 52) et une plaque de pressage (38, 48), et la bague d'entraînement (15) étant un composé séparé différent de la plaque conjuguée (42, 52),
la bague d'entraînement (15) étant raccordée par le biais du moyen de montage final (64) à la plaque conjuguée (42, 52) ou à un couvercle d'embrayage (63) de l'embrayage pour recouvrir une partie de l'embrayage (16), le moyen de montage final (64) étant orienté essentiellement dans la direction radiale ou essentiellement dans la direction axiale, **caractérisé en ce que** la masse primaire (18) prévoit une ouverture de montage (80) traversante s'étendant essentiellement axialement pour le guidage à travers le moyen de montage final (64).

6. Groupe d'embrayage selon l'une quelconque des revendications 1 à 5, **caractérisé en ce que** le moyen de montage final (64) présente un cône de centrage (92) pour l'orientation des composants à raccorder.

7. Groupe d'embrayage selon l'une quelconque des revendications 1 à 6, **caractérisé en ce que** l'embrayage (16) est réalisé sous forme de double embrayage avec un premier embrayage à friction (36) et un deuxième embrayage à friction (46), l'embrayage (16) présentant une plaque centrale (56) et la plaque centrale (56) constituant, à la fois pour le premier embrayage à friction (36) et pour le deuxième embrayage à friction (46), une plaque conjuguée (42, 52) pour le pressage par engagement par friction d'un disque d'embrayage (40, 50) entre la plaque centrale (56) et une plaque de pressage (38, 48) associée à l'embrayage à friction respectif (36, 46).
